# EUROPEAN PATENT SPECIFICATION

(11) **EP 0 547 230 B1**
(45) Date of publication and mention of the grant of the patent: **13.10.1999**
(21) Application number: 92912912.0
(22) Date of filing: 29.06.1992
(51) Int. Cl.: G06F 7/544, G06F 9/38

(54) **APPARATUS FOR SUM-OF-PRODUCT OPERATION**
SUMMENPRODUKTBERECHNUNGSVORRICHTUNG
DISPOSITIF DE TOTALISATION D'UN PRODUIT

(30) Priority: 01.07.1991 JP 16057691
(43) Date of publication of application: 23.06.1993
(73) Proprietor: FUJITSU LIMITED, Kawasaki-shi, Kanagawa 211 (JP); FUJITSU VLSI LIMITED, Kasugai-shi Aichi 487 (JP)
(72) Inventor: YAMADA, Kenji, Kasugai-shi, Aichi 487 (JP)
(74) Representative: Sunderland, James Harry
(86) International application number: JP9200819
(87) International publication number: WO9301541

(56) References cited:
- DE-A- 4 001 232
- JP-A- 1 169 669
- JP-A- 3 196 712
- PATENT ABSTRACTS OF JAPAN vol. 8, no. 163 (P-290)27 July 1984
- IEEE MICRO vol. 8, no. 6, December 1988, NEW YORK US pages 30 - 47 , XP118922 FUCCIO ET AL 'The DSP32C: AT &T's Second-Generation Floating-Point Digital Signal Processor'

## Description

### Technical Field

The present invention relates to a product-sum operation unit included in a variety of processors.

Due to the requirement for high speed operation of computer systems in recent years, arithmetic operations, particularly high speed product-sum operation is in a high demand. Product-sum operation means the addition of the multiplication result of two numbers (multiplicand and multiplier), to another number (addend). This product-sum operation is an indispensable arithmetic operation for processing, for example, a digital output signal from an analog-to-digital converter. Namely, the product-sum operation is an indispensable arithmetic operation for realizing, for example, the filtering process of a modem (modulator-demodulator) comprising an analog-to-digital converter, or high speed servo control, for the positioning of the read head in a hard disk driver.

Owing to the progress of semiconductor technology in recent years, a high performance product-sum operation unit included in a digital signal processor (DSP) or a micro-controller, etc. As explained above, a product-sum operation unit is now an indispensable element for realizing a variety of communication equipment or high performance control equipment.

### Background Art

As a product-sum operation unit, a digital multiplication cumulative adder unit has been proposed in the Japanese Unexamined Laid-Open Provisional Publication SHO 59-194242. This digital multiplication cumulative adder unit is formed by three or four multiplying units, first and second adders, first and second registers and a plurality of multiplexers. Each multiplying unit calculates each partial product by multiplying each partial data of a multiplicand and each partial data of a multiplier. The first and second adders generate a product by adding such partial products. The first register stores the resulting products. The second adder cumulatively adds the values of the first and second registers, and the second register stores the result of such additions. While the second adder cumulatively adds the values of the first and second registers, each multiplying unit calculates the partial products of the multiplicands and multipliers. The first and second adders generate a product by adding the new partial products. The first register stores the resulting products. The second adder cumulative adds the values of first and second registers and the second register stores the result of the addition.

As explained above, a digital multiplication cumulative adder unit realizes high speed multiplication cumulative addition, namely a product-sum operation by introducing a strategic hardware configuration.

However, the product-sum operation of this digital multiplication cumulative adder unit considers the cumulative result, which is stored in the second register, as an addend. Therefore, this digital multiplication cumulative adder unit cannot execute a product-sum operation using a desired number as an addend, and operations other than the product-sum operation, such as the continuous addition of two desired numbers. Therefore, when it is required to form a digital signal processor or microcontroller, etc., by loading this digital multiplication cumulative adder unit, another arithmetic unit which can execute operations other than the product-sum operation is also required. Accordingly, there rises a problem that it is impossible to realize integration of digital signal processor or microcontroller, etc.

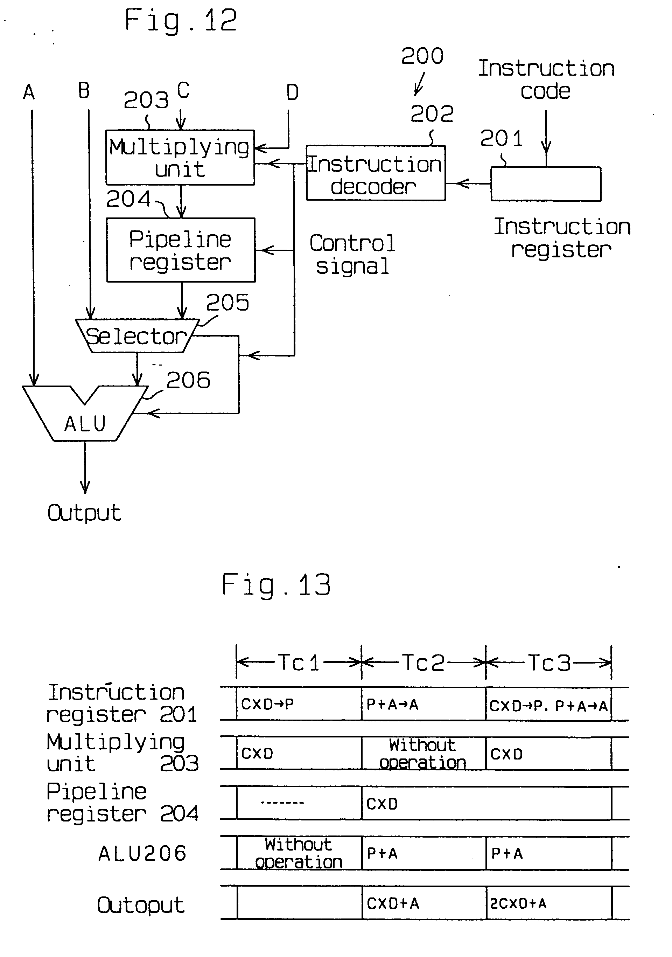

A product-sum operation unit for executing a product-sum operation through program control has also been proposed. Fig. 12 illustrates a block diagram of a product-sum operation unit 200, for executing a product-sum operation, with two instructions, a multiplication instruction and an addition instruction. This product-sum operation unit 200 is formed by an instruction register 201, an instruction decoder 202, a multiplying unit 203, a pipeline register 204, a data selector 205 and an adder unit (hereinafter, referred to as ALU) 206. The pipeline register 204 is provided for realizing high speed product-sum operation.

This product-sum operation unit 200 uses a multiplication instruction "C x D → P" and an addition instruction "P + A → A". The multiplication instruction "C x D → P" is used for storing a product of a multiplicand C and a multiplier D in the pipeline register 204. The addition instruction "P + A → A" is used for adding a value stored in the pipeline register 204, namely the multiplication result of the multiplying unit 203, and a number A, and for assigning the resulting sum to the new number A.

As shown in Fig. 13, when the multiplication instruction "C x D → P" is loaded in an instruction register 201 during the first machine cycle Tc1, this multiplication instruction "C x D → P" is decoded into a control signal by the instruction decoder 202. This control signal is outputted to the multiplying unit 203. On the basis of this control signal, the multiplying unit 203 executes the multiplication, and outputs the multiplication result to the pipeline register 204. This multiplication result is loaded into the pipeline register 204 during the next machine cycle Tc2.

When the addition instruction "P + A → A" is loaded into the instruction register 201 during the next machine cycle, this addition instruction "P + A → A" is decoded into a control signal by the instruction decoder 202. This control signal is outputted to the selector 205. On the basis of this control signal, the multiplication result is selected via the pipeline register 204, by the data selector 205.

Thereafter, the addition of the multiplication result and the number A is executed by ALU 206, based on the control signal from the instruction decoder 202. The addition result is the desired product-sum, and is used as a new number A to be added.

However, when a programmer generates a program for executing the product-sum operation, using the product-sum operation unit 200 shown in Fig. 12, with the generation of a program consisting of the multiplication instruction and addition instruction, etc., to recognize the operation of the pipeline register 204, namely recognition of the fact that the desired multiplication result has been stored or not, is required. Namely, as shown in Fig. 13, it must be recognized that a value of the pipeline register 204 of the addition instruction "P + A → A", that is loaded into the instruction register 201 during the machine cycle Tc2, uses a value of the pipeline register 204 of the multiplication instruction "C x D → P", that is loaded into the instruction register 201 during the first machine cycle Tc1. Moreover, in the case of loading the multiplication and addition instructions "C x D → P, P + A → A" to the instruction register 201 during the machine cycle Tc3, it must be recognized that a value of the pipeline register 204 of the addition instruction "P + A → A" must be value of the pipeline register 204 of the multiplication instruction "C x D → P", that is loaded into the instruction register 201, during the machine cycle Tc2. As explained above, there lies a problem that the generation of a program to operate the product-sum operation unit 200 is a large load for a programmer.

In addition, this product-sum operation unit 200 requires two machine cycles Tc1, Tc2 in order to generate only a result of the product-sum operation, thus causing a problem in the processing speed.

DE 40 01 232 A1 discloses a bus matrix for carrying out dual arithmetic operations. The bus matrix has a multiplier which calculates a product by multiplying a multiplicand and a multiplier, and has a adder for adding a summand and an addend, using pipeline architecture. The data paths of the bus matrix may be so controlled that the product from the multiplier may be applied to the adder as addend. A register may temporarily store the result of the last stage of the multiplier pipeline and then apply it to the adder pipeline.

The present invention has been proposed to overcome the problems described above, and therefore it is an object of the present invention to alleviate the load of the programmer by executing, on the occasion of generating a program by the programmers, the product-sum operations with a product-sum instruction consisting of a single instruction which does not require the operations of the pipeline register to be recognized, and to realize high speed product-sum operations by operating twice an adder unit during a single machine cycle.

According to the present invention there is provided a product-sum operation unit comprising
a multiplying unit for calculating a product by multiplying a multiplicand and a multiplier,
a pipeline register into which a multiplication result calculated by said multiplying unit can be loaded,
an adder unit for adding a summand and any one of an output of said pipeline register or an addend, and for providing an addition result as an output,
characterised in that the product-sum operation unit further comprises:
timing signal generating means for generating a first timing signal synchronized with a first clock, and a second timing signal having the same frequency as, but different phase from, said first clock, said second timing signal being synchronized with a second clock;
first instruction latch and decoder means into which an instruction can be loaded in synchronization with said first timing signal, and operable to decode said instruction and output a first control signal corresponding to said instruction;
second instruction latch and decoder means into which said instruction can be loaded from said first instruction latch and decoder means, in sychronization with said second timing signal, and operable to decode said instruction and output a second control signal corresponding to said instruction;
a control signal selector into which the first and second control signals are input, operable to output said second control signal to the adder unit in response to said first timing signal, and to output said first control signal to the adder unit, in response to said second timing signal.

### Disclosure of the Invention

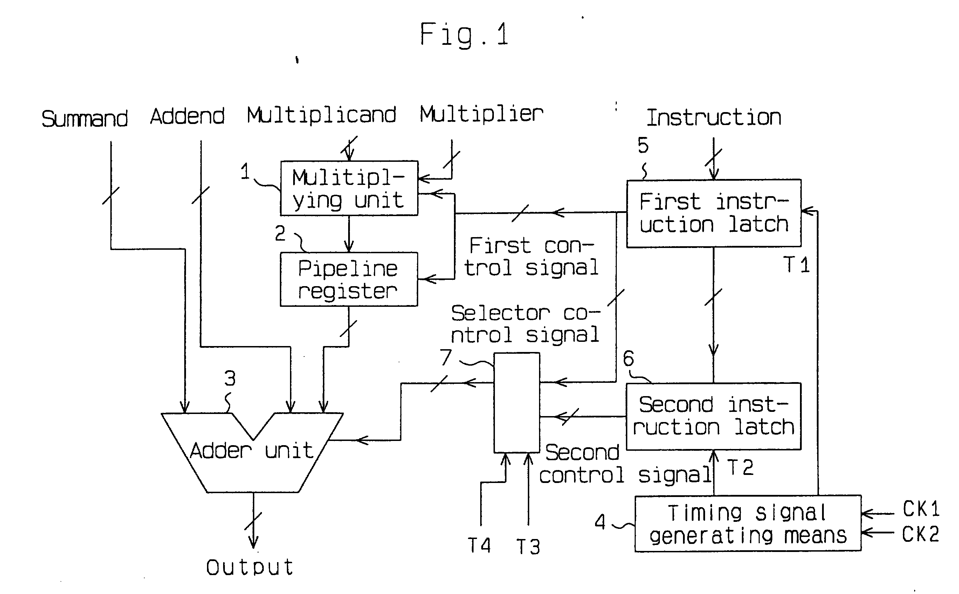

A product-sum operation unit of the present invention comprises, as shown in Fig. 1, which illustrates the principle of the present invention, a multiplying unit (1) for calculating a product, by multiplying a multiplier with a multiplicand; and a pipeline register (2) for loading a multiplication result, which is calculated by the multiplying unit (1) and an adder unit (3), for adding a summand and any one of an output of the pipeline register (2), or an addend.

A timing signal generating means (4) generates first and second timing signals (T1, T2) that are synchronized with first and second clocks (CK1, CK2). A first instruction latch (5) loads an instruction synchronously with the first timing signal (T1) to output a first control signal. A second instruction latch (6) loads an instruction loaded into the first instruction latch (5), synchronously with the second timing signal (T2), to output a second control signal. A control signal selector (7) outputs the second control signal to the adder unit (3), which is responsive to the first timing signal (T1), and outputs the first control signal to the adder unit (3), which is responsive to the second timing signal (T2).

It is now also possible to utilize a third timing signal, which is generated synchronously with the first timing signal, and a fourth timing signal, which is generated synchronously with the second timing signal, and to control the control signal selector with the third and fourth timing signals. In this case, it is desirable that the third timing signal be outputted in the same timing as the first timing signal, and the fourth timing signal in the same timing as the second timing signal.

Moreover, it is also possible to utilize first and second clocks for controlling the operations of the product-sum operation unit; for outputting the third timing signal in the same timing as the first clock; and for outputting the fourth timing signal in the same timing as the second clock.

In addition, it is also allowed for the adder unit to add a summand and an output of the pipeline register based on the second control signal, and to add a summand and an addend based on the first control signal.

As another embodiment, it is also possible to form a product-sum operation unit comprising a multiplying unit for calculating a product, by multiplying a multiplicand with a multiplier. A pipeline register loads a multiplication result calculated by the multiplying unit. A data selector inputs both an output of the pipeline register and an addend, and selects and output any one of an output of the pipeline register or an addend. An adder unit adds a summand and an output of the data selector. A timing signal generating circuit generates a first timing signal synchronized with a first clock, and a second timing signal synchronized with a second clock, which has the same frequency as, but different phase from the first clock. A second instruction register loads an instruction synchronously with the first timing signal, to output the loaded instruction. A third instruction register loads the instruction sent from the second instruction register synchronously with the second timing signal, to output the loaded instruction. A control signal selector inputs instructions through the second instruction register and third instruction register, and outputs an instruction sent from the third instruction register, in response to the first timing signal and an instruction sent from the second instruction register, in response to the second timing signal. A first instruction decoder decodes the instruction sent through the second instruction register into the multiplying unit control signal, to output the decoded instruction, to the multiplying unit and the pipeline register. A second instruction decoder decodes an instruction outputted from the control signal selector into an ALU control signal, to output the decoded instruction to the data selector and adder unit.

As a further embodiment, it is moreover possible to form a product-sum operation unit comprising a multiplying unit for calculating a product, by multiplying a multiplicand with a multiplier. A pipeline register loads a multiplication result calculated by the multiplying unit. A data selector inputs both an output of the pipeline register and an addend, and selects and outputs any one of an output of the pipeline register or an addend. An adder unit adds a summand and an output of data selector. A timing signal generating circuit generates a first timing signal synchronized with a first clock, and a second timing signal synchronized with a second clock, which has the same frequency as, and a different phase from the first clock. A second instruction register loads an instruction synchronously with the first timing signal, to output the loaded instruction. A third instruction decoder decodes an instruction sent from the second instruction register into a control signal, to output the decoded instruction to the multiplying unit and pipeline register, a control signal latch for loading the control signal outputted from the third instruction decoder, synchronously with the second timing signal, in order to output the loaded control signal. A control signal selector inputs the control signal outputted from the third instruction decoder and the control signal sent through the control signal latch; selects the control signal sent through the control signal latch, in response to the first timing signal; and selects the control signal outputted from the third instruction decoder in response to the second timing signal and outputs the selected control signal to the data selector and adder unit.

Moreover, as a further embodiment, it is possible to form a product-sum operation unit comprising a multiplying unit for calculating a product by multiplying a multiplicand with a multiplier. A pipeline register loads a multiplication result calculated by the multiplying unit. A data selector inputs both an output of the pipeline register and an addend, and selects and outputs any one of an output of the pipeline register or an addend. An adder unit adds a summand and an output of data selector. A state counter outputs a state signal by counting the first clock and also outputs a state signal, by counting the second clock having the same frequency as, and different phase from the first clock. A fourth instruction decoder decodes input instructions into the control signals, to output to the multiplying unit and to the pipeline register, and also to output the control signal when the number of cycles required for the execution of the instruction code is matched with each state signal. A logic circuit generates a first timing signal synchronized with the first clock, and a second timing signal synchronized with the second clock on the basis of the control signals and the first and second clocks. A second instruction register loads an instruction synchronously with the first timing signal, to output the loaded instruction to the fourth instruction decoder. A third instruction register loads the instruction sent through the second instruction register synchronously with the second timing signal, to output the loaded instruction. A fifth instruction decoder decodes and outputs the instruction sent through the third instruction register into an ALU control signal. An ALU control signal output circuit inputs a control signal outputted from the fourth instruction decoder, and a control signal outputted from the fifth instruction decoder, to select the control signal from the fifth instruction decoder based on the first clock, to select the control signal outputted from the fourth instruction decoder based on the second clock, and to output the selected control signal to the data selector and adder unit.

In this case, the logic circuit could include a first AND circuit for generating a first timing signal that is synchronized with the first clock, based on any one of the control signals, and any one of the first and second clocks. The logic circuit could also include a second AND circuit for generating a second timing signal synchronized with the second clock, based on the other control signal and the other clock signal.

Moreover, the first AND circuit is preferably a NAND circuit, for generating the first timing signal synchronized with the first clock, based on the control signals and the second clock, while the second AND circuit is preferably a NAND circuit for generating the second timing signal synchronized with the second clock based on the control signals and the first clock.

### Brief Description of the Drawings

Fig. 1 is a block diagram for explaining the principle disclosed in the present invention;
Fig. 2 is a layout diagram illustrating an embodiment of a DSP to which the present invention is applied.
Fig. 3 is a block diagram illustrating a sequence unit;
Fig. 4 is a block diagram illustrating a product-sum operation unit, according to a first embodiment, formed by a part of the sequence unit and an execution unit;
Fig. 5 is a timing chart illustrating the operation of a product-sum operation unit, according to a first embodiment;
Fig. 6 is a block diagram illustrating a product-sum operation unit, according to a second embodiment;
Fig. 7 is a block diagram illustrating a product-sum operation unit, according to a third embodiment;
Fig. 8 is a block diagram illustrating a product-sum operation unit composed of a part of the sequence unit and the execution unit, according to a fourth embodiment.
Fig. 9 is a timing chart illustrating the operation of a product-sum operation unit, according to the fourth embodiment.
Fig. 10 is a schematic diagram illustrating an optical disk driver utilizing the DSP;
Fig. 11 is a diagram of DSP for explaining a software technology in the high speed servo control system of optical disk;
Fig. 12 is a block diagram illustrating conventional device; and
Fig. 13 is a timing chart illustrating the operation of the conventional device.

### Preferred Embodiments of the Invention

### (First Embodiment)

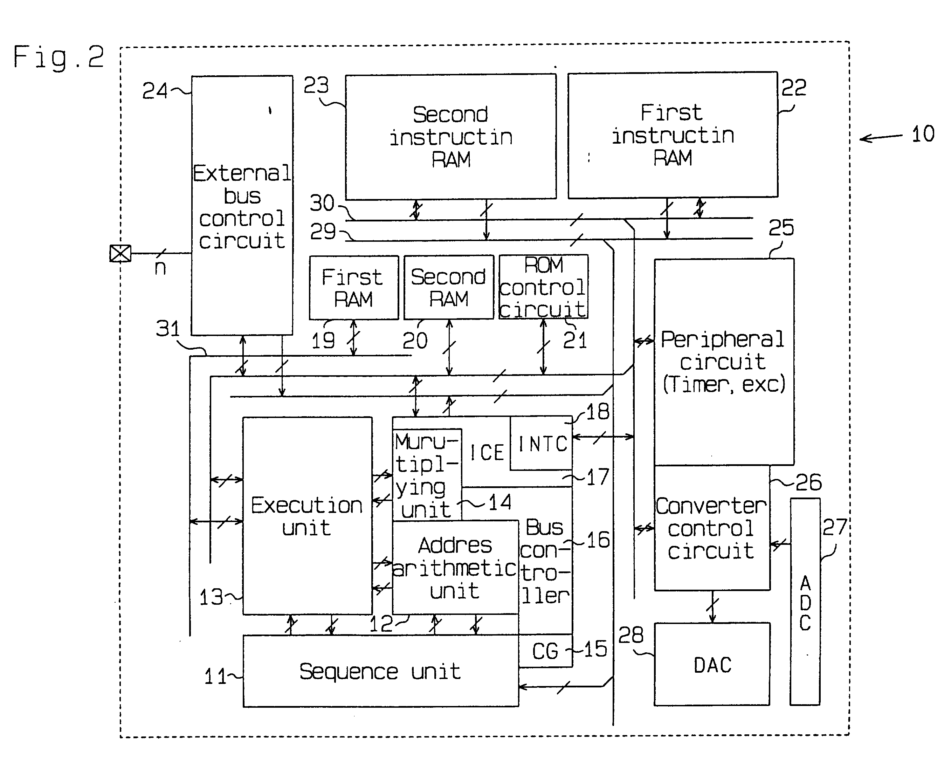

A first embodiment of a digital signal processor according to the present invention will be explained in detail, with reference to Fig. 2 to Fig. 5.

As shown in Fig. 2, a digital signal processor (DSP) 10 comprises a sequence unit 11, an execution unit 13, a multiplying unit 14, a clock generator (CG) 15, a bus controller 16, an emulator interface (ICE) 17, an interrupt controller (INTC) 18, a first RAM 19, a second RAM 20, a ROM control circuit 21, first and second instruction RAMs 22, 23, an external bus control circuit 24, a peripheral circuit 25 such as a timer, a converter control circuit 26, an analog-to-digital converter (ADC) 27, a digital-to-analog converter (DAC) 28, an instruction bus 29 and data buses 30, 31.

The instruction bus 29 mutually connects the sequence unit 11, the emulator interface (ICE) 17, the first and second instruction RAM 22, 23, and the external bus control circuit 24. The data bus 30 mutually connects the execution unit 13, the INTC 18, the second RAM 20, the ROM control circuit 21, the first and second instruction RAMs 22, 23, the external buss control circuit 24, the peripheral circuit 25, and the converter control circuit 26. The data bus 31 mutually connects the execution unit 13 and the first RAM 19.

The clock generator 15 generates a first machine clock CK1, with a 50% duty ratio, which changes in the predetermined period, and a second machine clock CK2, which is delayed by half a cycle from the first machine clock CK1. In this embodiment, the clock generator 15 generates the first and second machine clocks CK1, CK2, having a period of 40 ns, namely the frequency of 25 MHz. The clock generator 15 supplies the first and second machine clocks CK1, CK2 to each part of the DSP 10.

The first and second instruction RAMs 22, 23 store programs. These stored programs are transferred through the instruction bus 29 or data bus 30, for use as instruction code or data.

ADC 27 converts an analog input signal to a digital signal, to output the digital signal to the converter control circuit 26. The converter control circuit 26 transfers the digital signal inputted from the ADC 27 through the data bus 30. Moreover, the converter control circuit 26 outputs the digital signal that is inputted via the data bus 30, to the DAC 28. The DAC 28 converts a digital signal inputted from the converter control circuit 26, into an analog signal, and outputs it.

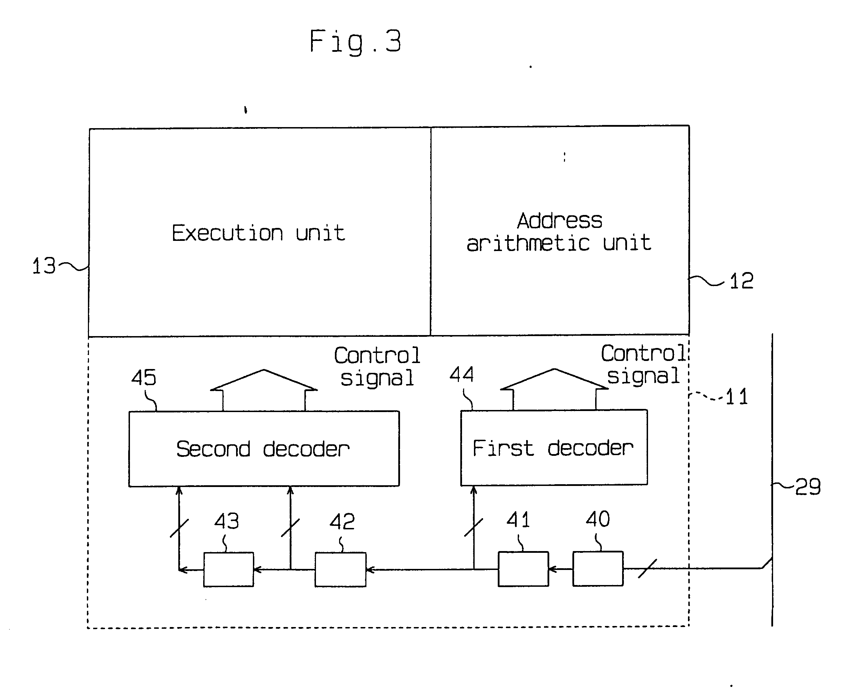

The sequence unit 11 comprises, as shown in Fig. 3, a fetch register 40, a first instruction register 41, a second instruction register 42 as a first instruction latch, a third instruction register 43 as a second instruction latch, and first and second decoders 44, 45, etc. The fetch register 40 is connected to the instruction bus 29. The first to third instruction registers 41, 42, 43 are connected, in this sequence, to the fetch register 40. The fetch register 40 fetches an instruction code, that is transferred via the instruction bus 29 on the basis of the predetermined latch signal. The first to third instruction registers 41 to 43, respectively load the outputs of the registers in the preceding stage, on the basis of the predetermined latch signals.

A first decoder 44 is connected to a first instruction register 41. This decoder 44 decodes an instruction code outputted from the first instruction register 41 into a control signal, and outputs this control signal to the address arithmetic unit 12. The address arithmetic unit 12 calculates an address for access depending on the control signal sent from the first decoder 44.

A second decoder 45 is connected to a second and a third instruction registers 42, 43. The second decoder 45 decodes each instruction code outputted from the second and third instruction registers 42, 43, and outputs the control signal to the execution unit 13.

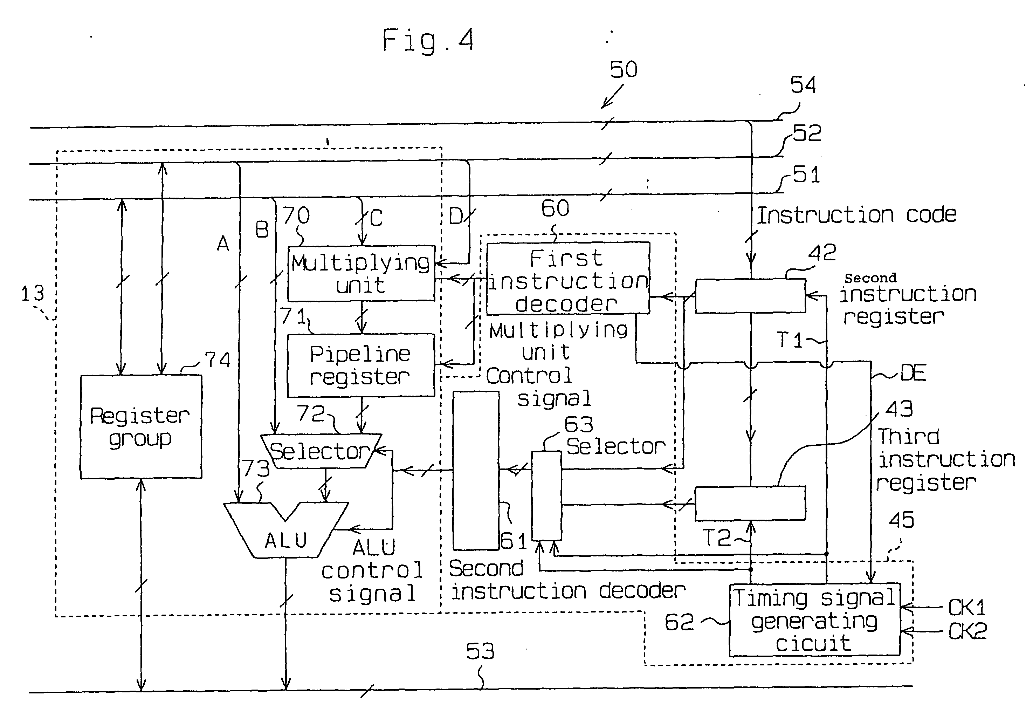

As shown in Fig. 4, a product-sum operation unit 50 of the present invention comprises second and third instruction registers 42, 43, a second decoder 45, an execution unit 13, data buses 51 to 53, and an instruction bus 54 connected to the instruction bus 29, etc.

The second decoder 45 comprises first and second instruction decoders 60, 61, a timing signal generating circuit 62, and a control signal selector 63. The execution unit 13 comprises a multiplying unit 70, a pipeline register 71, a data selector 72, an adder unit (ALU) 73, and a register group 74.

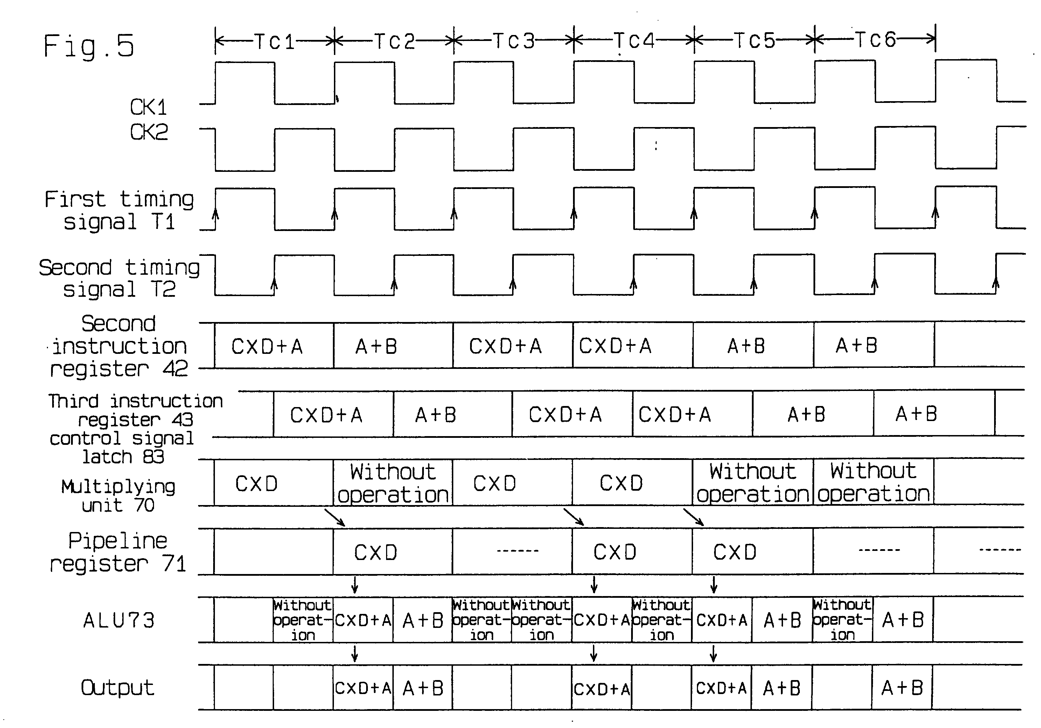

The timing signal generating circuit 62 inputs a decoded signal DE of a first instruction decoder 60, and also inputs first and second machine clocks CK1, CK2. The timing signal generating circuit 62 generates, based on the decoded signal DE of the first instruction decoder 60, the first timing signal T1 which is synchronized with the starting point of the machine cycles Tc1 to Tc6, and the second timing signal T2 which is delayed by half a cycle from the first timing signal T1, as shown in Fig. 5. Moreover, the timing signal generating circuit 62 outputs the first timing signal T1 to the second instruction register 42 and the control signal selector 63, and also outputs the second timing signal T2 to the third instruction register 43 and the control signal selector 63.

The second instruction register 42 loads each instruction code inputted via the instruction bus 54, depending on the rising edge of the first timing signal T1. The second instruction register 42 then outputs the loaded instruction code to the first instruction decoder 60, and control signal selector 63. The first instruction decoder 60 decodes the input instruction code into a multiplying unit control signal, and then outputs the multiplying unit control signal to the multiplying unit 70 and the pipeline register 71.

The third instruction register 43 loads an instruction loaded in the second instruction register 42, at the rising edge of the second timing signal T2, and outputs this instruction code to the control signal selector 63. Accordingly, the instruction code loaded in the second instruction register 43 is delayed by half a cycle of each machine cycle Tc1 to Tc6, from the instruction code loaded in the second instruction register 42.

The control signal selector 63 selects the instruction code outputted from the third instruction register 43, in response to the first timing signal T1, and outputs the instruction code to the second instruction decoder 61. Moreover, the control signal selector 63 selects the instruction code outputted from the second instruction register 42, in response to the second timing signal T2, and outputs the instruction code to the second instruction decoder 61. Namely, at the former half cycle of each machine cycle Tc1 to Tc6, the control signal selector 63 selects the instruction code from the third instruction register 43, and selects and outputs the instruction code from the second instruction register 42 in the latter half cycle of each machine cycle Tc1 to Tc6. The second instruction decoder 61 decodes the instruction code input, and outputs the ALU control signal to the data selector 72 and to the ALU 73.

The multiplying unit 70 inputs a multiplicand C and a multiplier D via the data buses 51, 52. The multiplying unit 70 calculates a product, by multiplying the multiplicand C with the multiplier D, when the multiplying unit control signal, from the first instruction decoder 60, is based on the multiplication instruction or the product-sum instruction. The pipeline register 71 also loads an output of the multiplying unit 70 based on the multiplying unit control signal from the first instruction decoder 60, and outputs a multiplication result to the data selector 72 in the next stage.

The data selector 72 inputs an output of the pipeline register 71, and also inputs an addend B, via the data bus 71. The data selector 72 also selects any one of an output from the pipeline register 71, or a first addend B, and then outputs it to the ALU 73, in response to the ALU control signal outputted from the second instruction decoder 61. Namely, the data selector 72 selects the addend B, when the ALU control signal is inputted, based on the instruction code of the second instruction register 42, or selects the output of the pipeline register 71, namely the multiplication result, and then outputs the instruction code to the ALU 73, when the ALU control signal is inputted based on the instruction code of the third instruction register 43.

The ALU 73 inputs an output of the data selector 72, namely an output of the pipeline register 71, or an addend B, and also inputs a summand A, via the data bus 52. The ALU 73 adds the summand A and an output of the pipeline register 71 or addend B, based on the ALU control signal outputted from the second instruction decoder 61. Namely, the ALU 73 adds the addend B and the summand A, when the ALU control signal is inputted based on the instruction code of the second instruction register 42. Alternatively, the ALU 73 adds an output of the pipeline register 71 and the summand A, when the ALU control signal is inputted based on the instruction code of the third instruction register 43.

An addition result by the ALU 73 is transferred to the register group 74, via the data bus 53. The register group 74 outputs the multiplicand C, multiplier D, addend B, and summand A, via the data buses 51, 52. Here, it is assumed that the product-sum operation unit 50, described above, uses the product-sum instruction "C x D + A" and the addition instruction "A + B". The product-sum instruction "C x D + A" means that a summand A is added to a product of a multiplicand C and a multiplier D. The addition instruction "A + B" means addition of an addend B transferred via the data buses 51, 52 and a summand A.

As shown in Fig. 5, when the product-sum instruction "C x D + A" is inputted in the first machine cycle Tc1, this product-sum instruction is loaded in the second instruction register 42 synchronously with the first timing signal T1, which is outputted from the timing signal generating circuit 62. The product-sum instruction loaded in the second instruction register 42 is outputted to the first instruction decoder 60, the third instruction register 43 and the control signal selector 63. This product-sum instruction is decoded to the multiplying unit control signal by the first instruction decoder 60, and is then outputted to the multiplying unit 70 and the pipeline register 71.

Since this multiplying unit control signal triggers the product-sum operation, the multiplication of the multiplicand C and the multiplier D is executed by the multiplying unit 70, during the machine cycle Tc1. This multiplication result is loaded in the pipeline register 71 during the next machine cycle Tc2, based on the multiplying unit control signal.

When the second timing signal T2 is outputted from the timing signal generating circuit 62 during the machine cycle Tc1, the product-sum instruction "C x D + A" that is outputted from the second instruction register 42, is loaded in the third instruction register 43 synchronously with this second timing signal T2, and this product-sum instruction is outputted to the control signal selector 63. In this timing, the control signal selector 63 selects the instruction code of the second instruction register 42, based on the second timing signal T2. It is then decoded to the ALU control signal by the second instruction decoder 61, and is then outputted to the data selector 72. In this case, since the multiplication result is not yet loaded to the pipeline register 71, the ALU 73 does not operate.

When the addition instruction "A + B" is inputted in the second machine cycle Tc2, this addition instruction is loaded in the second instruction register 42 synchronously with the first timing signal T1. The addition instruction loaded in the second instruction register 42 is outputted to the first instruction decoder 60, the third instruction register 43, and the control signal selector 63. This addition instruction is decoded by the first instruction decoder 60, and is then outputted to the multiplying unit 70 and the pipeline register 71, as the multiplying unit control signal. However, this multiplying unit control signal is the addition instruction, and therefore the multiplying unit 70 does not operate.

In the machine cycle Tc2, the instruction code of the product-sum instruction of the third instruction register 43 is selected by the control signal selector 63, depending on the first timing signal T1. The instruction code of this product-sum instruction is decoded into the ALU control signal by the second instruction decoder 61, and is then outputted to the data selector 72 and the ALU 73. Thereby, the multiplication result "C x D" loaded in the pipeline register 71 is selected by the data selector 72, and this multiplication result is outputted to the ALU 73. This multiplication result is added to the summand A by the ALU 73 to obtain the product-sum. The obtained product-sum result is stored in the register group 74, via the data bus 53.

In the machine cycle Tc2, when the second timing signal T2 is outputted from the timing signal generating circuit 62, the addition instruction "A + B" that is outputted from the second instruction register 42, is loaded in the third instruction register 43, synchronously with the second timing signal T2. This addition instruction is outputted to the control signal selector 63. In this case, the instruction code of the addition instruction of the second instruction register 42 is selected by the control signal selector 63, depending on the second timing signal T2. This addition instruction is decoded into the ALU control signal by the second instruction decoder 61, and is then outputted to the data selector 72. Thereby, the addend B is selected by the data selector 72, and is then outputted to the ALU 73. This addend B is added to the summand A by the ALU 73. The obtained addition result is stored in the register group 74, via the data bus 53.

When the product-sum instruction "C x D + A" is inputted in the third machine cycle Tc3, this product-sum instruction is loaded in the second instruction register 42, synchronously with the first timing signal T1. The product-sum instruction loaded in the second instruction register 42 is then outputted to the first instruction register 60, the third instruction register 43, and the control signal selector 63. This product-sum instruction is decoded into the multiplying unit control signal, by the first instruction decoder 60, and is then outputted to the multiplying unit 70 and the pipeline register 71.

Since this multiplying unit control signal triggers the product-sum operation, the multiplication of the summand C and the multiplier D is executed in the machine cycle Tc3. In this case, the product-sum operation result based on the product-sum instruction in the machine cycle Tc1, and the addition result based on the addition instruction in the machine cycle Tc2, are respectively defined at the end of the machine cycle Tc2. Therefore, the multiplication result of the machine cycle Tc1, or the addition result of the machine cycle Tc2, could be used as a summand C or a multiplier D of the product-sum instruction in the machine cycle Tc3. The multiplication result in the machine cycle Tc3 is loaded in the pipeline register 71 in the next machine cycle Tc4, in response to the multiplying unit control signal.

Moreover, in the machine cycle Tc3, the product-sum instruction "C x D + A" outputted from the second instruction register 42 is loaded in the third instruction register 43, synchronously with the second timing signal T2. This product-sum instruction is then outputted to the control signal selector 63. In this case, the instruction code of the addition instruction of the second instruction register 42 is selected by the control signal selector 63, depending on the second timing signal T2, and is then decoded to the ALU control signal by the second instruction decoder 61, and outputted to the data selector 72. In this timing, since the multiplication result is not yet loaded in the pipeline register 71, the ALU 73 does not operate.

When the product-sum instruction "C x D + A" is inputted in the fourth machine cycle Tc4, this product-sum instruction is loaded in the second instruction register 42 synchronously with the first timing signal T1. The product-sum instruction loaded in the second instruction register 42 is outputted to the first instruction decoder 60, the third instruction register 43, and the control signal selector 63. This product-sum instruction is decoded to the multiplying unit control signal by the first instruction decoder 60, and is then outputted to the multiplying unit 70 and the pipeline register 71.

Since this multiplying unit control signal triggers the product-sum operation, the multiplication of the summand C and the multiplier D is executed by the multiplying unit 70 in the machine cycle Tc4. In this case, the product-sum result based on the product-sum instruction of the machine cycle Tc3 is not defined at the ending time of the machine cycle Tc3. Therefore, the summand C and the multiplier D of the product-sum instruction in the machine cycle Tc4, have new values that are not related to the multiplication result of the machine cycle Tc3. The multiplication result in the machine cycle Tc4 is loaded in the pipeline register 71 in the next machine cycle Tc5, depending on the multiplying unit control signal.

In the machine cycle Tc4, the instruction code of the product-sum instruction of the third instruction register 43 is selected by the control signal selector 63, based on the first timing signal T1, and is then decoded to the ALU control signal by the second instruction decoder 61. It is then outputted to the data selector 72 and the ALU 73. Thereby, the multiplication result "C x D" loaded in the pipeline register 71 is selected by the data selector 72 and is then outputted to the ALU 73. This multiplication result is added to a summand A by the ALU 73, to obtain a product-sum based on the product-sum instruction in the machine cycle Tc3. The obtained product-sum result is stored in the register group 74 via the data bus 53.

In the machine cycle Tc4, the product-sum instruction "C x D + A" outputted from the second instruction register 42 is loaded in the third instruction register 43, synchronously with the second timing signal T2. This product-sum instruction is outputted to the control signal selector 63. In this case, the instruction code of the product-sum instruction of the second instruction register 42 is selected by the control signal selector 63, depending on the second timing signal T2, and is then decoded to the ALU control signal by the second instruction decoder 61, and outputted to the data selector 72. In this timing, since a new multiplication result is not loaded in the pipeline register 71, the ALU 73 does not operate.

When the addition instruction "A + B" is inputted in the fifth machine cycle Tc5, this addition instruction is loaded in the second instruction register 42, synchronously with the first timing signal T1. The addition instruction loaded in the second instruction register 42 is outputted to the first instruction decoder 60, the third instruction register 43 and the control signal selector 63. This addition instruction is decoded by the first instruction decoder 60, and is then outputted as the multiplying unit control signal to the multiplying unit 70 and to the pipeline register 71. However, this multiplying unit control signal is the addition signal, and therefore the multiplying unit 70 does not operate.

In the machine cycle Tc5, the instruction code of the product-sum instruction of the third instruction register 43 is selected by the control signal selector 63, based on the first timing signal T1. The instruction code of this product-sum instruction is decoded to the ALU control signal by the second instruction decoder 61, and is then outputted to the data selector 72 and the ALU 73. Thereby, the multiplication result C x D" loaded in the pipeline register 71 is selected by the data selector 72, and this multiplication result is outputted to the ALU 73. This multiplication result is added to the summand A by the ALU 73, to obtain a product-sum based on the product-sum instruction in the machine cycle Tc4. The obtained product-sum result is stored in the register group 74 via the data bus 53.

In the machine cycle Tc5, the addition instruction "A + B" which is outputted from the second instruction register 42, is loaded in the third instruction register 43, synchronously with the second timing signal T2. This addition instruction is outputted to the control signal selector 63. In this case, the instruction code of the addition instruction of the second instruction register 42 is selected by the control signal selector 63, based on the second timing signal T2, and is then decoded to the ALU control signal by the second instruction decoder 61, and outputted to the data selector 72. Thereby, the addend B is selected by the data selector 72, and is then outputted to the ALU 73. This addend B is added to the summand A by the ALU 73. The obtained addition result is stored in the register group 74 via the data bus 53.

Moreover, in the sixth machine cycle Tc6, when the addition instruction "A + B" is inputted, this addition instruction is loaded in the second instruction register 42, synchronously with the first timing signal T1. The addition instruction loaded in the second instruction register 42 is outputted to the first instruction decoder 60, the third instruction register 43, and the control signal selector 63. This addition instruction is decoded by the first instruction decoder 60, and then outputted as the multiplying unit control signal to the multiplying unit 70 and the pipeline register 71. However, since this multiplying unit control signal is the addition instruction, the multiplying unit 70 does not operate.

In the machine cycle Tc6, the instruction code of the addition instruction of the third instruction register 43 is selected by the control signal selector 63, based on the first timing signal T1. The instruction code of this addition instruction is decoded by the second instruction decoder 61 into the ALU control signal, and is then outputted to the data selector 72 and the ALU 73. However, since this addition instruction is already executed in the latter half of the machine cycle Tc5, the ALU 73 does not operate.

When the second timing signal T2 is outputted from the timing signal generating circuit 62 in the machine cycle Tc6, the addition instruction "A + B" outputted from the second instruction register 42 is loaded in the third instruction register 43, synchronously with the second timing signal T2. This addition instruction is outputted to the control signal selector 63. In this case, the instruction code of the addition instruction of the second instruction register 42 is selected by the control signal selector 63, based on the second timing signal T2. This addition instruction is decoded into the ALU control signal by the second instruction decoder 61, and is then outputted to the data selector 72. Thereby, the addend B is selected by the data selector 72, and is then outputted to the ALU 73. This addend B is added to the summand A by the ALU 73. In this case, the addition result, based on the addition instruction in the machine cycle Tc5, is defined at the ending time of the machine cycle Tc5. Therefore, the addition result in the machine cycle Tc5 could be used as the summand A or addend B of the addition instruction of the machine cycle Tc6. The obtained addition result is stored in the register group 74, via the data bus 53.

As explained above, this embodiment comprises, in the design stage, a pipeline register 71 within the product-sum operation unit 50, and also comprises second and third instruction registers 42, 43, a first instruction decoder 60 for outputting a multiplying unit control signal, in order to control a multiplying unit 70, and the pipeline register 71, and a second instruction decoder 61 for outputting an ALU control signal, in order to control a data selector 72 and the ALU 73. Therefore, it is possible for the product-sum operation unit 50 to execute the product-sum operation with the product-sum instruction consisting of a single instruction. As a result, when a programmer generates a program for controlling the product-sum operation unit 50, it is no longer necessary to recognize operations of the pipeline register 71 and thereby the load of the programmer can be alleviated.

In this embodiment, the timing signal generating circuit 62 generates a first timing signal T1 that is synchronized with the starting time of the first machine cycle CK1, and a second timing signal T2 that is synchronized with the starting time of the second machine cycle CK2, namely delayed by half a cycle of the machine cycle, from the first timing signal T1. The instruction code is loaded in the second instruction register 42, depending on the first timing signal T1, and the instruction code is loaded, after a delay time of a half cycle of the machine cycle, in the third instruction register 43, based on the second timing signal T2. The control signal selector 63 selects the instruction code of the third instruction register 43, based on the first timing signal T1, and the instruction code of the second instruction register 42, based on the second timing signal T2, to output these instruction codes to the data selector 72 and the ALU 73, via the second instruction decoder 61.

Therefore, the ALU 73 can be operated twice during the one machine cycle. Thereby, this product-sum operation unit 50 can continuously execute the product-sum operation and addition, during two machine cycles, selecting the desired value for a multiplicand C, a multiplier D, a summand A and an addend B, in order to realize high speed arithmetic operations. Moreover, this product-sum operation unit can continuously execute the additions by selecting desired value for a summand A and a addend B. In addition, this product-sum operation unit can continuously execute the product-sum operation or multiplication. In this case, the preceding product-sum result or multiplication result cannot be used as a multiplicand C or a multiplier D.

### (Second Embodiment)

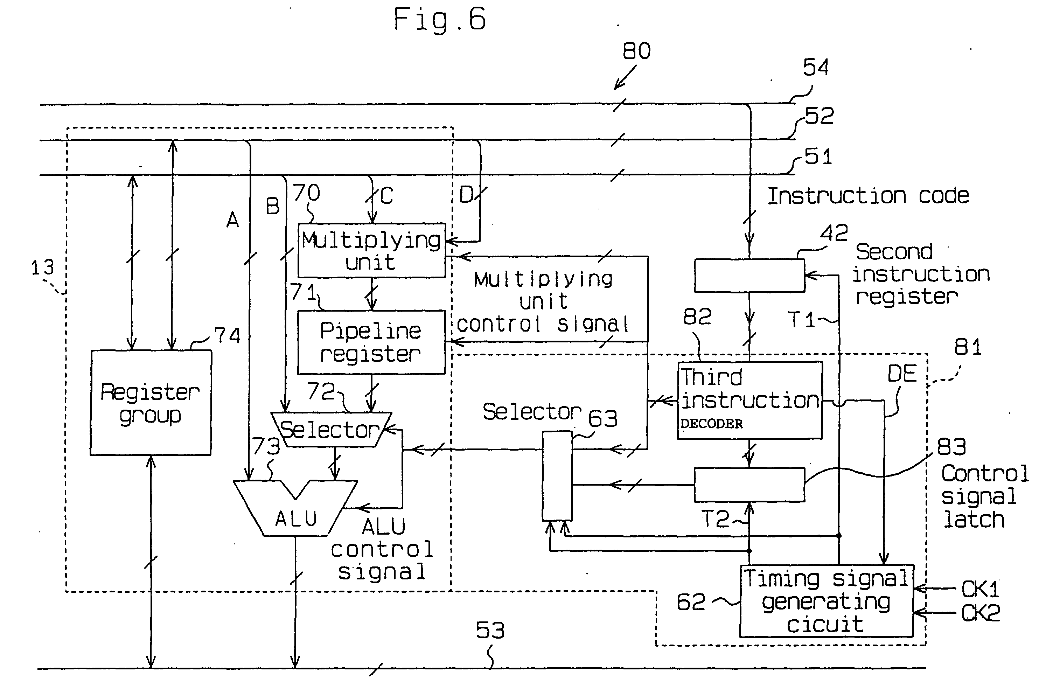

Next, a second embodiment of a product-sum operation unit will be explained with reference to Fig. 6. The elements similar to those in the above embodiment are given similar reference numerals, and the explanation of these element is partly omitted.

A product-sum operation unit 80 of this embodiment provides only one third instruction decoder 82, and replaces the third instruction register 43 of the product-sum operation unit 50, with a control signal latch 83. The first timing signal T1 of the timing signal generating circuit 62 is inputted to the second instruction register 42, while the second timing signal T2 is inputted to the control signal latch 83.

The third instruction decoder 82 decodes an instruction code loaded in the second instruction register 42, and outputs the decoded signal to a multiplying unit 70, a pipeline register 71, a control signal selector 63, and a control signal latch 83. The control signal latch 83 loads the decoded signal of the instruction decoder 82 based on the second timing signal T2, and outputs the loaded decoded signal to the control signal selector 63.

The third instruction decoder 82 outputs a control signal for controlling the selector 72, and the ALU 73, via the selector 63. The selector 63 operates, as in the case of the first embodiment, in response to the first and second timing signals T1, T2, generated on the basis of the first and the second machine clocks CK1, CK2.

The product-sum operation unit of this embodiment provides an effect that is similar to that of the above embodiment, and simplifies the circuit configuration, through the use of only one third instruction decoder 82.

### (Third Embodiment)

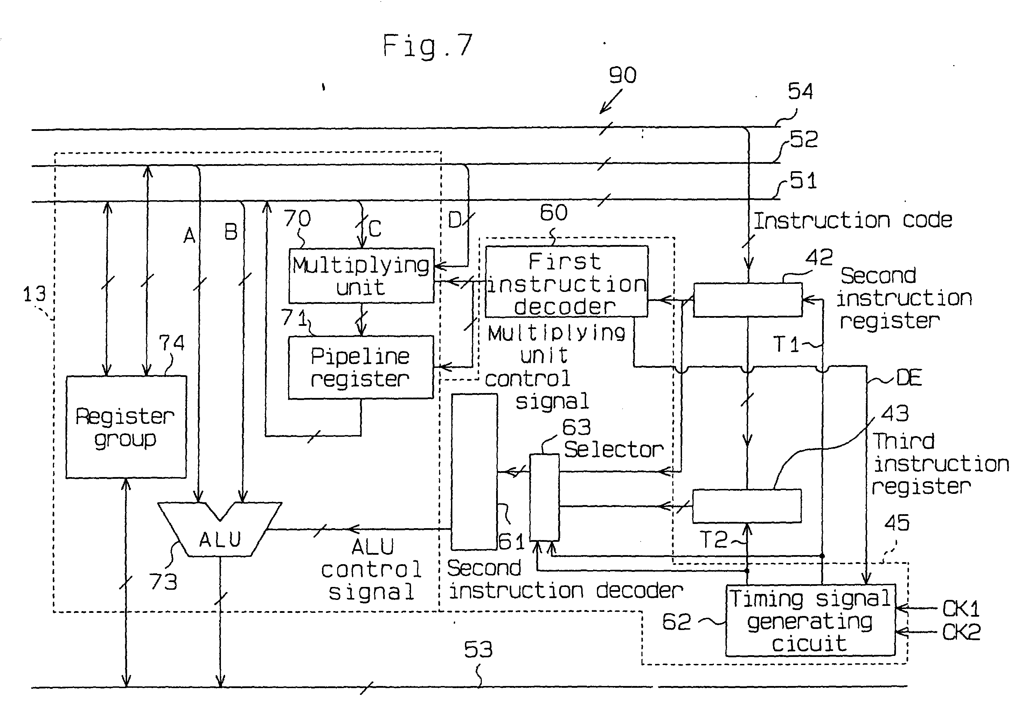

A third embodiment of the product-sum operation unit will be explained with reference to Fig. 7. In this embodiment, elements similar to those in the above embodiments are given similar reference numerals, and the explanation of these element is partly omitted.

A product-sum operation unit 90 in this embodiment does not include a data selector 72 provided in the product-sum operation unit 50 shown in Fig. 4. A data bus 51 is used as a data selector based on the control signal from the control unit (not illustrated).

While continuously executing the addition after the product-sum operation in the product-sum operation unit 90, a multiplication result of the multiplying unit 70 that is loaded in the pipeline register 71, is inputted to the ALU 73 as an addend B, via the data bus 51. A summand A is inputted to the ALU 73 from a register group 74, via a data bus 52. The ALU 73 adds the summand A and the addend B, to calculate a product-sum result. This product-sum result is stored in the register group 74, via the data bus 53. Next, the addend B and the summand A are inputted to the ALU 73, via the data buses 51, 52, and the ALU 73 executes the addition.

This product-sum operation unit 90 also provides the effect similar to that of the above embodiments, and also simplifies the circuit configuration through the employment of only one data selector 63.

### (Fourth Embodiment)

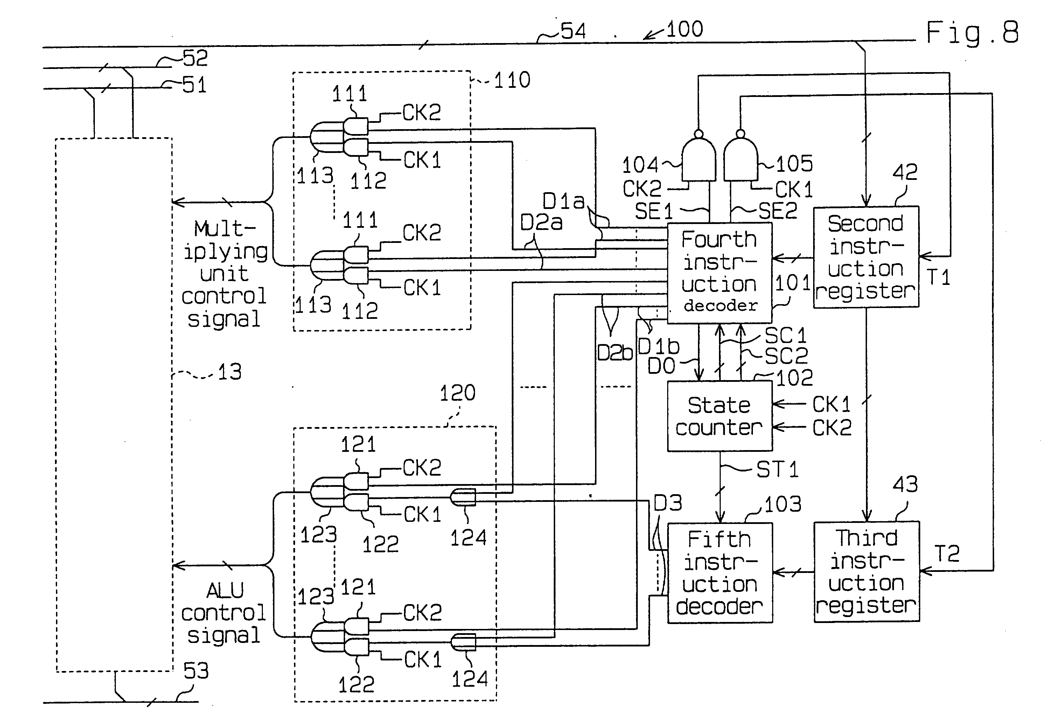

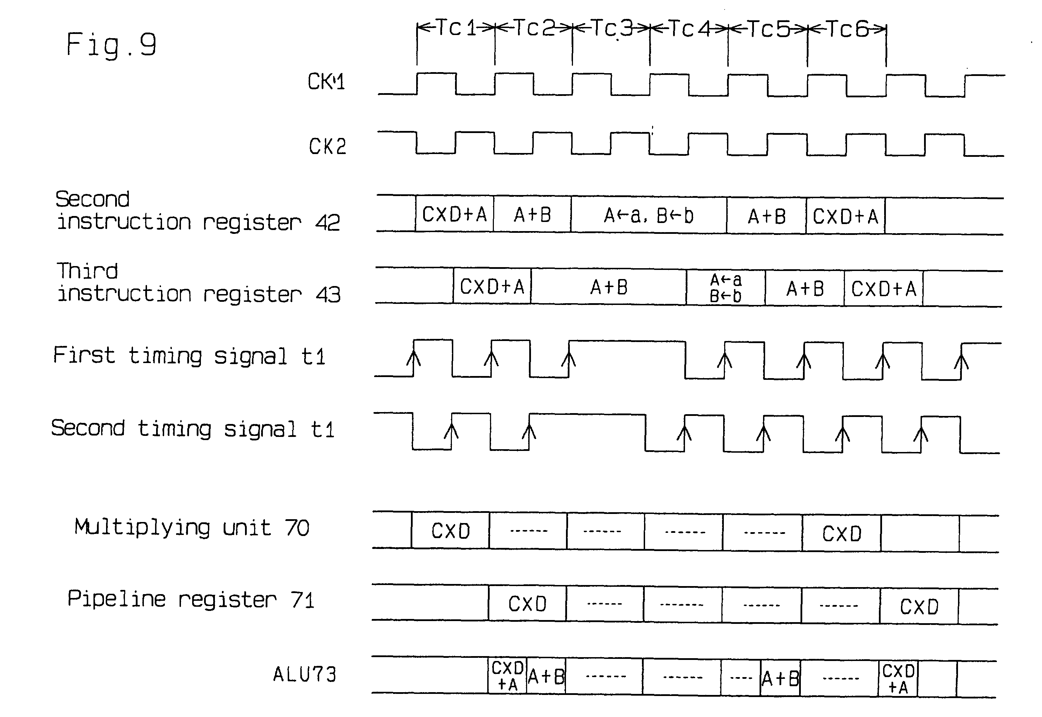

A more preferred fourth embodiment of a product-sum operation unit will be explained hereafter, with reference to Fig. 8 and Fig. 9. In this embodiment, the elements similar to those in above embodiments are also given similar reference numerals, and the explanation of these elements are partly omitted.

A product-sum operation unit 100 comprises, as shown in Fig. 8, an execution unit 13, second and third instruction registers 42, 43, fourth and fifth instruction decoders 101, 103, a state counter 102, NAND circuits 104, 105, a multiplying unit control signal output circuit 110, and an ALU control signal output circuit 120 operating as a control signal selector.

In this embodiment, a timing signal generating means is formed by the fourth instruction decoder 101, the state counter 102, and NAND circuits 104, 105. Namely, the fourth instruction decoder 101 is connected to the second instruction register 42, and also to the state counter 102. The fifth instruction decoder 103 is connected to the third instruction register 43, and also to the state counter 102.

The state counter 102 inputs the first and second machine clocks CK1, CK2. When a decode start signal D0 is inputted from the fourth instruction decoder 101, the state counter 102 is reset, outputting a start indicating signal ST1, for indicating the start of an instruction to the fifth instruction decoder 103. When the state counter 102 is once reset, it counts up each input of the first and second machine clock pulses CK1, CK2. The state counter 102 generates, for example, in response to the first machine clock CK1, a plurality of clocks CS1 generated in the timing of each one cycle, two cycles, ..., n cycles of the clock CK1. The state counter 102 also generates, in response to the second machine clock CK2, a plurality of clocks CS2. The state counter 102 outputs the state signals SC1, SC2 to the fourth instruction decoder 101.

When an instruction code is inputted from the second instruction register 42, the fourth instruction decoder 101 decodes the instruction code, judges the number of machine cycles required for executing this instruction, and outputs a decode start signal D0 to the state counter 102. The fourth instruction decoder 101 separately outputs multi-bit (m bits in this embodiment) control signals D1a, D2a to the multiplying unit control signal output circuit 110, and also outputs multi-bit (k bits in this embodiment) control signals D1b, D2b to the ALU control signal output circuit 120. The control signals D1a, D1b are generated on the basis of the result of the logical operation between the decode result of the instruction code, and the state signal SC1 of the state counter 102. The control signals D2a, D2b are generated on the basis of the result of logical operation between the decode result of instruction code, and the state signal SC2 of the state counter 102.

Moreover, the fourth instruction decoder 101 separately outputs the control signals SE1, SE2. The control signal SE1 is generated on the basis of the state signal SC1 and the number of machine cycles required for instruction code, and, when the state signal SC1 matches the number of machine cycles of the instruction code, the control signal SE1 becomes an H level. The control signal SE2 is generated on the basis of the state signal SC2 and the number of machine cycles required for the instruction code, and, when the state signal SC1 matches the number of machine cycles of the instruction code, the control signal SE2 becomes an H level.

A NAND circuit 104 inputs a second machine clock CK2 and also the control signal SE1. The NAND circuit 104 generates a first timing signal T1 shown in Fig. 9, on the basis of the logic of the second machine clock CK2, and the control signal SE1. The NAND circuit 105 inputs a first machine clock CK1 and also the control signal SE2. The NAND circuit 105 generates a second timing signal T2 shown in Fig. 9 on the basis of the logic of the first machine clock CK1 and the control signal SE2.

Therefore, as shown in Fig. 9, when the instruction code is an instruction of one machine cycle, pulses are generated to the first and second timing signals T1, T2, similar to the machine cycles Tc1, Tc2 of Fig. 9, synchronously with each pulse of the first and second machine clocks CK1, CK2. Moreover, when the instruction code requires two machine cycles, pulses are generated as part of the first and second timing signals T1, T2, synchronously with every second pulse of the first and second machine clocks CK1, CK2. For example, the pulses in the first timing signal T1 are generated during the machine cycles Tc3 to Tc4, and the pulses in the second timing signal T2 are generated during the machine cycles Tc2 to Tc4.

When the start indicating signal ST1 is inputted from the state counter 102, the fifth instruction decoder 103 decodes the instruction code inputted from the third instruction register 43 into a multi-bit (k bits in the case of this embodiment) control signal D3, and then outputs it to the ALU control signal output circuit 120.

The multiplying unit control signal output circuit 110 comprises a plurality of pairs (m pairs in this embodiment) of AND circuits 111, 112, and a plurality of OR circuits 113 (m circuits in this embodiment). Each AND circuit 111 inputs each bit of the control signal D1a as the one input, and the second machine clock CK2 as the other input. Each AND circuit 112 inputs each bit of the control signal D2a as the one bit, and the first machine clock CK1 as the other input. Each OR circuit 113 inputs the outputs of a pair of AND circuits 111, 112. Therefore, when the first machine clock CK1 becomes an H level, each OR circuit 113 outputs each bit of the control signal D2a as the multiplying unit control signal. Moreover, each OR circuit 113 outputs, when the second machine clock CK2 becomes an H level, each bit signal of the control signal D1a, as the multiplying unit control signal.

The ALU control signal output circuit 120 comprises a plurality of pairs (k pairs in this embodiment) of AND circuits 121, 122, and a plurality (k circuits in this embodiment) of OR circuits 123, 124. Each OR circuit 124 inputs each bit of the control signal D2b as the one input, and each bit of control signal D3 as the other input. Each AND circuit 121 inputs each bit of the control signal D1b as the one input and a second machine clock CK2 as the other input. Each AND circuit 122 inputs an output of the OR circuit 124 as the one input and a first machine clock CK1 as the other input. Each OR circuit 123 inputs the outputs of the pair of AND circuits 121, 122. Therefore, each OR circuit 123 outputs, when the first machine clock CK1 becomes an H level, each bit signal of the control signal D2b or D3, as the ALU control signal. Moreover, each OR circuit 123 outputs, when the second machine clock CK2 becomes an H level, each bit signal of control signal D1b as the ALU control signal.

As shown in Fig. 9, when the product-sum instruction C x D + A" is inputted to the fourth instruction decoder 101 in the first machine cycle Tc1, in the product-sum operation unit, explained above, the fourth instruction decoder 101 outputs a decode start signal D0 to the state counter 102. The fourth instruction decoder 101 determines that the product-sum instruction is executed in the one machine cycle. The fourth instruction decoder 101 receives the state signal SC1 of the state counter 102, to generate the control signal SE1. The NAND circuit 104 generates the first timing signal T1 synchronously with the second machine clock CK2. On the other hand, a pulse of the second timing signal T2 is generated in the machine cycle Tc1, from the control signal SE2, based on the state signal SC2. A pulse of the first timing signal T1 is outputted in the next machine cycle Tc2.

When the addition instruction "A + B" is inputted in the second machine cycle Tc2, the state counter 102 is reset by the decode start signal D0, and the addition instruction is loaded in the second instruction register 42, synchronously with the first timing signal T1. Since this addition instruction is a one-machine-cycle instruction, a pulse of the second timing signal T2 is generated in the machine cycle Tc2, and a pulse of the first timing signal T1 is outputted in the next machine cycle Tc3.

Therefore, the product-sum instruction "C x D + A", and addition instruction "A + B" are executed continuously in the two machine cycles of the cycle Tc1, Tc2.

When a transfer instruction "A ← a, B ← b" is inputted in the third machine cycle Tc3, the state counter 102 is reset by the decode start signal D0, and this transfer instruction is loaded in the second instruction register 42, synchronously with the first timing signal T1. Since this transfer instruction is a two-machine-cycle instruction, the fourth instruction decoder 101 receives the state signals SC1, SC2 that are outputted in the two machine cycles, and generates the control signals SE1, SE2, in order to generate the first and second timing signals T1, T2. In the next fourth machine cycle Tc4, a pulse of the second timing signal T2 is generated, and in the machine cycle Tc5, a pulse of the first timing signal T1 is outputted. Moreover, since an instruction of the machine cycle Tc3 is a transfer instruction of the two machine cycles, the multiplying unit 70 and the ALU 73 do not operate during the machine cycles Tc3 and Tc4.

When the addition instruction "A + B" is inputted in the fifth machine cycle Tc5, this addition instruction is loaded in the second instruction register 42, synchronously with the first timing signal T1. Since this addition instruction is a one machine cycle instruction, a pulse of the second timing signal T2 is generated in the machine cycle Tc5, and a pulse of the first timing signal T1 is outputted in the next machine cycle Tc6. In this machine cycle Tc5, since an instruction loaded in the second instruction register 42 is an addition instruction, the multiplying unit 70 does not operate. In the machine cycle Tc5, the ALU control signal output circuit 110 selects a control signal of the addition instruction from the fourth instruction decoder 101, based on the second machine clock CK2 and executes the addition.

The product-sum operation unit 100 of this embodiment provides a similar effect to that of above embodiments, and matches the interval for generating the first and second timing signals T1, T2, depending on the instruction which requires a plurality of machine cycles for execution. Therefore, this unit 100 widens the degree of freedom in the generation of programs.

### (Fifth Embodiment)

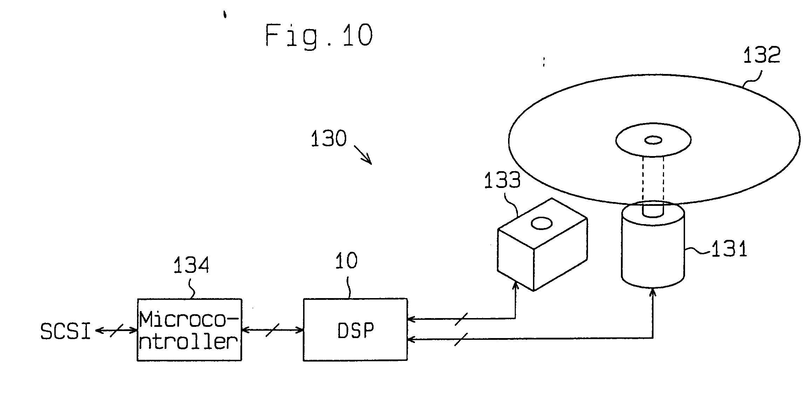

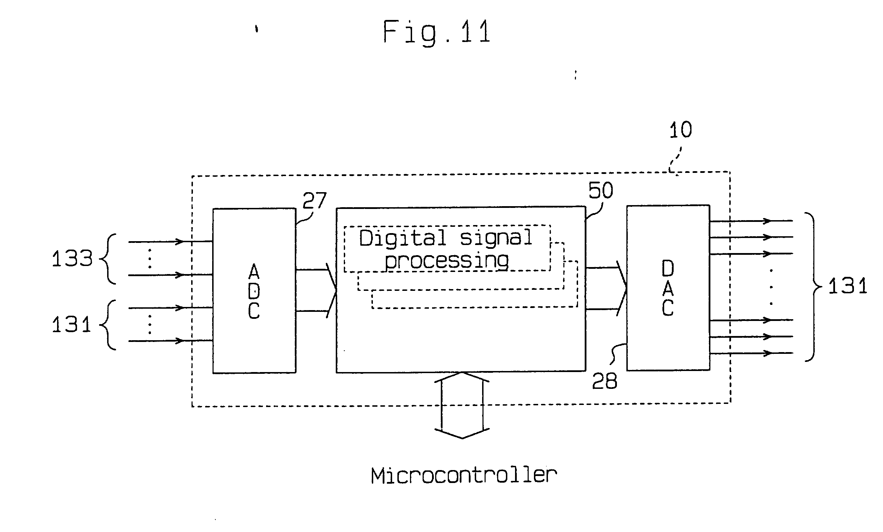

Another embodiment of the unit according to the present invention will also be explained hereunder with reference to Fig. 10 and Fig. 11.

As shown in Fig. 10, an optical disk driver 130 comprises a digital signal processor (DSP) 10, a drive motor 131, a disk drive consisting of a lens actuator/linear motor 133, etc., and a controller consisting of a microcontroller 134.

The drive motor 131 detects analog values of the rotating position, and the rotating speed of the drive shaft and outputs such analog values to the DSP 10. The drive motor 131 rotates an optical disk, based on the analog control signal outputted from the DSP 10.

The lens actuator/linear motor 133 detects analog signals, such as the position of the lens, etc., and outputs the analog signals to the DSP 10. Moreover, the lens actuator/linear motor 133 also adjusts the position of the lens based on the analog control signal outputted from the DSP 10.

As shown in Fig. 11, the DSP 11 converts an analog signal, which is inputted from the drive motor 131, or the lens actuator/linear motor 133, into a digital signal in the analog-to-digital converter 27. The product-sum operation unit 50 processes, at a high speed, this digital signal, and outputs the processing result to the digital-to-analog converter 28. The digital-to-analog converter 28 converts a digital signal sent from the product-sum operation unit 50, into an analog control signal, in order to output the analog control signal to the drive motor 131, or to the lens actuator/linear motor 133.

The microcontroller 134 exchanges the digital signals with the DSP 10, and also exchanges the data through an interface in the optical disk side (SCS1). The microcontroller 134 conducts a variety of controls, such as error correction and data modulation/demodulation.

An optical disk drive unit 130 in this embodiment uses the DSP 10 comprising the product-sum operation unit 50, and thereby controls, at a high speed, the drive motor 311 or the lens actuator/linear motor 133.

### (Industrial Applicability)

As explained above, the product-sum operation unit of the present invention is suitable for the configuration of a digital signal processor, and a microcontroller for the processing of digital output signals from an analog-to-digital converter. It is available for a modem, hard disk drive and optical disk drive, using digital signal processors, microcontrollers, etc.

## Claims

1. A product-sum operation unit comprising
a multiplying unit (1) for calculating a product by multiplying a multiplicand and a multiplier,
a pipeline register (2) into which a multiplication result calculated by said multiplying unit (1) can be loaded,
an adder unit (3) for adding a summand and any one of an output of said pipeline register (2) or an addend, and for providing an addition result as an output,
characterised in that the product-sum operation unit further comprises:
timing signal generating means (4) for generating a first timing signal (T1) synchronized with a first clock (CK1), and a second timing signal (T2) having the same frequency as, but different phase from, said first clock (CK1), said second timing signal (T2) being synchronized with a second clock (CK2) ;
first instruction latch and decoder means (5) into which an instruction can be loaded in synchronization with said first timing signal (T1), and operable to decode said instruction and output a first control signal corresponding to said instruction;
second instruction latch and decoder means (6) into which said instruction can be loaded from said first instruction latch and decoder means (5), in synchronization with said second timing signal (T2), and operable to decode said instruction and output a second control signal corresponding to said instruction;
a control signal selector (7) into which the first and second control signals are input, operable to output said second control signal to the adder unit (3) in response to said first timing signal (T1), and to output said first control signal to the adder unit (3), in response to said second timing signal (T2).

2. A product-sum operation unit according to claim 1, wherein the timing signal generating means (4) is operable to generate a third timing signal (T3) synchronously with said first timing signal (T1), and to generate a fourth timing signal (T4) synchronously with said second timing signal (T2), whereby said control signal selector (7) is controlled by said third and fourth timing signals (T3, T4).

3. A product-sum operation unit according to claim 2, wherein said third timing signal (T3) is output with the same timing as said first timing signal (T1), and said fourth timing signal (T4) is output with the same timing as said second timing signal (T2).

4. A product-sum operation unit according to claim 2, wherein said first and second clocks (CK1, CK2) are provided for controlling the operation of said product-sum operation unit, and wherein said third timing signal (T3) is output with the same timing as said first clock (CK1), and said fourth timing signal (t4) is output with the same timing as said second clock (CK2).

5. A product-sum operation unit according to claim 1, wherein said adder unit (3) adds the summand and the output of said pipeline register (2), based on said second control signal, and also adds the summand and the addend, based on said first control signal.

6. A product-sum operation unit, comprising
a multiplying unit (70) for calculating a product by multiplying a multiplicand and a multiplier,
a pipeline register (71) into which a multiplication result calculated by said multiplying unit (70) can be loaded,
an adder unit (73) for adding a summand and any one of an output of said pipeline register (71) or an addend, and for providing an addition result as an output,
characterised in that the product-sum operation unit further comprises:
a timing signal generating circuit (62) for generating a first timing signal (T1) synchronized with a first clock (CK1), and a second timing signal (T2) having the same frequency as, but different phase from, said first clock (CK1), said second timing signal (T2) being synchronized with a second clock (CK2);
a first instruction register (42) into which an instruction can be loaded in synchronization with said first timing signal (T1), and operable to output said instruction;
a second instruction register (43) into which said instruction can be loaded from said first instruction register (42), in sychronization with said second timing signal (T2), and operable to output said instruction;
a control signal selector (63) into which are input said instruction as output by the first instruction register (42) and said instruction as output by the second instruction register (43), and operable, in response to said first timing signal (T1), to output said instruction as output by the second instruction register (43) and, in response to said second timing signal (T2), to output said instruction as output by the first instruction register (42),
a first instruction decoder (60) operable to decode said instruction output from the first instruction register (42) into a multiplying unit control signal and to output the decoded instruction to said multiplying unit (70) and said pipeline register (71), and
a second instruction decoder (61) operable to decode the instruction output from said control signal selector (63) and to output the decoded instruction to said adder unit (73).

7. A product-sum operation unit, comprising
a multiplying unit (70) for calculating a product by multiplying a multiplicand and a multiplier,
a pipeline register (71) into which a multiplication result calculated by said multiplying unit (70) can be loaded,
an adder unit (73) for adding a summand and any one of an output of said pipeline register (71) or an addend, and for providing an addition result as an output,
characterised in that the product-sum operation unit further comprises:
a timing signal generating circuit (62) for generating a first timing signal (T1) synchronized with a first clock (CK1), and a second timing signal (T2) having the same frequency as, but different phase from, said first clock (CK1), said second timing signal (T2) being synchronized with a second clock (CK2);
an instruction register (42) into which an instruction can be loaded in synchronization with said first timing signal (T1), and operable to output said instruction;
an instruction decoder (82) operable to decode said instruction output from the instruction register (42) into a control signal and to output the decoded instruction to said multiplying unit (70) and said pipeline register (71), and
a control signal latch (83) into which the control signal output from said instruction decoder (82) can be loaded in synchronization with said second timing signal (T2), and operable to output the loaded control signal; and
a control signal selector (63) into which are input the control signal output by the instruction decoder (82) and the control signal output by the control signal latch (83), and operable, in response to said first timing signal (T1), to select the control signal output by the control signal latch (83) and, in response to said second timing signal (T2), to select said control signal output by the instruction decoder (82), and to output the selected control signal to the adder unit (73).

8. A product-sum operation unit comprising;
a multiplying unit (70) for calculating a product by multiplying a multiplicand and a multiplier,
a pipeline register (71) into which a multiplication result calculated by said multiplying unit (70) can be loaded,
an adder unit (73) for adding a summand and any one of an output of said pipeline register (71) or an addend, and for providing an addition result as an output,
characterised in that the product-sum operation unit further comprises:
a state counter (102) operable to output a first state signal (SC1) by counting a first clock (CK1), and also to output a second state signal (SC2) by counting a second clock (CK2) having the same frequency as, and different phase from, said first clock (CK1),
a first instruction decoder (101) operable to decode an instruction input thereto into a first control signal, to output the first control signal to said multiplying unit (70) and pipeline register (71), and to output second and third control signals (SE1, SE2) when the number of cycles required for the execution of the instruction code matches respectively the first and second state signals (SC1, SC2) ;
a logic circuit (104, 105) operable to generate a first timing signal (T1) synchronized with said first clock (CK1) and based on said second and third control signals (SE1, SE2) and said first and second clocks (CK1, CK2), and to generate a second timing signal (T2) synchronized with said second clock (CK2);
a first instruction register (42) into which an instruction can be loaded in synchronization with said first timing signal (T1), and operable to output the loaded instruction to said first instruction decoder (101),
a second instruction register (43) into which an instruction from the first instruction register (42) can be loaded in synchronization with said second timing signal (T2), and operable to output the loaded instruction;
a second instruction decoder (103) for decoding the instruction output from said second instruction register (43) into an adder unit control signal, and operable to output the adder unit control signal; and
an adder unit control signal output circuit (120) into which there is input the first control signal output from said first instruction decoder (101) and the adder unit control signal output from said second instruction decoder (103), operable to select said adder unit control signal output from said second instruction decoder (103) based on said first clock (CK1), and to select said first control signal output from the first instruction decoder (101) based on said second clock (CK2), and to output the selected control signal to the adder unit (73).

9. A product-sum operation unit according to claim 8, wherein said logic circuit (104, 105) is composed of a first respectively AND or NAND circuit for generating said first timing signal (T1), synchronized with said first clock (CK1), based on any one of said second and third control signals (SE1, SE2), and any one of said first and second clocks (CK1, CK2), and a second respectively AND or NAND circuit for generating said second timing signal (T2), synchronized with said second clock signal (CK2), based on the other of said second and third control signals (SE1, SE2) and the other of said first and second clocks (CK1, CK2).

10. A product-sum operation unit as claimed in claim 6 is further comprising
a data selector (72) into which the output of said pipeline register (71) and said addend are input, operable to select as output any one of said output of said pipeline register (71) or said addend, wherein the decoded instruction sent to said adder unit (73) is also sent to the data selector (72).

11. A product-sum operation unit as claimed in any of claims 7 to 9, further comprising
a data selector (72) into which the output of said pipeline register (71) and said addend are input, operable to select as output any one of said output of said pipeline register (71) or said addend, wherein the selected control signal output to the adder unit (73) is also output to the data selector (72).

## Patentansprüche

1. Produktsummen-Operationseinheit, mit:
einer Multipliziereinheit (1) zum Berechnen eines Produktes durch Multiplizieren eines Multiplikanden und eines Multiplikators,
einem Pipelineregister (2), in welches ein Multiplikationsergebnis geladen wird, welches durch die Multipliziereinheit berechnet wurde,
einer Addiereinheit (3) zum Addieren eines Summanden und irgendeiner einer Ausgangsgröße des Pipelineregisters (2) oder eines Addenden, und um ein Additionsergebnis als eine Ausgangsgröße zu erzeugen,
dadurch gekennzeichnet, daß die Produktsummen-Operationseinheit folgendes aufweist:
eine Zeitsteuersignal-Generatoreinrichtung (4) zum Erzeugen eines ersten Zeitsteuersignals (T1), welches mit einem ersten Takt (CK1) synchronisiert ist, und eines zweiten Zeitsteuersignals (T2) mit der gleichen Frequenz wie, jedoch einer verschiedenen Phase von dem ersten Takt (CK1), wobei das zweite Zeitsteuersignal (T2) mit einem zweiten Takt (CK2) synchronisiert ist;
eine erste Befehlsverriegelungs- und Dekodiereinrichtung (5), in die ein Befehl synchron mit dem ersten Zeitsteuersignal (T1) geladen werden kann und die derart betrieben werden kann, um den Befehl zu dekodieren und ein erstes Steuersignal entsprechend dem Befehl auszugeben;
eine zweite Befehlsverriegelungs- und Dekodiereinrichtung (6), in die der Befehl von der ersten Befehlsverriegelungs- und Dekodiereinrichtung (5) synchron mit dem zweiten Zeitsteuersignal (T2) geladen werden kann und die betreibbar ist, um den Befehl zu dekodieren und ein zweites Steuersignal entsprechend dem Befehl auszugeben;
eine Steuersignalwählvorrichtung (7), in die das erste und das zweite Steuersignal eingespeist werden und die betreibbar ist, um das zweite Steuersignal zu der Addiereinheit (3) im Ansprechen auf das erste Zeitsteuersignal (T1) auszugeben, und um das erste Zeitsteuersignal zu der Addiereinheit (3) im Ansprechen auf das zweite Zeitsteuersignal (T2) auszugeben.

2. Produktsummen-Operationseinheit nach Anspruch 1, bei der die Zeitsteuersignal-Generatoreinrichtung (4) so betreibbar ist, um ein drittes Zeitsteuersignal (T3) synchron mit dem ersten Zeitsteuersignal (T1) zu erzeugen und um ein viertes Zeitsteuersignal (T4) synchron mit dem zweiten Zeitsteuersignal (T2) zu erzeugen, wodurch die Steuersignalwählvorrichtung (7) durch das dritte und das vierte Zeitsteuersignal (T3, T4) gesteuert wird.

3. Produktsummen-Operationseinheit nach Anspruch 2, bei der das dritte Zeitsteuersignal (T3) in der gleichen Zeitlage wie das erste Zeitsteuersignal (T1) ausgegeben wird und bei der das vierte Zeitsteuersignal (T4) mit der gleichen Zeitlage wie das zweite Zeitsteuersignal (T2) ausgegeben wird.

4. Produktsummen-Operationseinheit nach Anspruch 2, bei der der erste und der zweite Takt (CK1, CK2) für den Zweck vorgesehen sind, um die Betriebsweise der Produktsummen-Operationseinheit zu steuern, und bei der das dritte Zeitsteuersignal (T3) mit der gleichen Zeitlage wie der erste Takt (CK1) ausgegeben wird und das vierte Zeitsteuersignal (T4) mit der gleichen Zeitlage wie der zweite Takt (CK2) ausgegeben wird.

5. Produktsummen-Operationseinheit nach Anspruch 1, bei der die Addiereinheit (3) den Summanden und die Ausgangsgröße des Pipelineregisters (2) addiert, basierend auf dem zweiten Steuersignal, und auch den Summanden und den Addenden basierend auf dem ersten Steuersignal addiert.

6. Produktsummen-Operationseinheit, mit:
einer Multipliziereinheit (70) zum Berechnen eines Produktes durch Multiplizieren eines Multiplikanden und eines Multiplikators,
einem Pipelineregister (71), in welches ein Multiplikationsergebnis, welches durch die Multipliziereinheit (70) berechnet wurde, geladen werden kann,
einer Addiereinheit (73) zum Addieren eines Summanden und irgendeiner einer Ausgangsgröße des Pipelineregisters (71) oder eines Addenden, und um ein Additionsergebnis als eine Ausgangsgröße zu liefern,
dadurch gekennzeichnet, daß die Produktsummen-Operationseinheit ferner folgendes aufweist:
eine Zeitsteuersignal-Generatorschaltung (62) zum Erzeugen eines ersten Zeitsteuersignals (T1) synchronisiert mit einem ersten Takt (CK1) und eines zweiten Zeitsteuersignals (T2) mit der gleichen Frequenz wie, jedoch einer verschiedenen Phase von dem ersten Takt (CK1), wobei das zweite Zeitsteuersignal (T2) mit einem zweiten Takt (CK2) synchronisiert ist;
ein erstes Befehlsregister (42), in welches ein Befehl synchron mit dem ersten Zeitsteuersignal (T1) geladen werden kann und welches betreibbar ist, um den Befehl auszugeben;
ein zweites Befehlsregister (43), in welches der Befehl von dem ersten Befehlsregister (42) synchron mit dem zweiten Taktsignal (T2) geladen werden kann und welches betreibbar ist, um den Befehl auszugeben;
eine Steuersignalwählvorrichtung (63), in die der Befehl als Ausgangsgröße durch das erste Befehlsregister (42) und der Befehl als Ausgangsgröße durch das zweite Befehlsregister (43) eingespeist werden und die im Ansprechen auf das erste Zeitsteuersignal (T1) betreibbar ist, um den Befehl als Ausgangsgröße durch das zweite Befehlsregister (43) auszugeben, und um im Ansprechen auf das zweite Zeitsteuersignal (T2) den Befehl als Ausgangsgröße durch das erste Befehlsregister (42) auszugeben,
wobei der erste Befehlsdekodierer (60) betreibbar ist, um den von dem ersten Befehlsregister (42) ausgegebenen Befehl in ein Multipliziereinheit-Steuersignal zu dekodieren und um den dekodierten Befehl an die Multipliziereinheit (70) und das Pipelineregister (71) auszugeben, und
einen zweiten Befehlsdekodierer (61), der betreibbar ist, um den von der Steuersignalwählvorrichtung (63) ausgegebenen Befehl zu dekodieren und um den dekodierten Befehl an die Addiereinheit (73) auszugeben.

7. Produktsummen-Operationseinheit, mit:
einer Multipliziereinheit (70) zum Berechnen eines Produktes durch Multiplizieren eines Multiplikanden und eines Multiplikators,
einem Pipelineregister (71), in welches ein Multiplikationsergebnis, welches durch die Multipliziereinheit (70) berechnet wurde, geladen werden kann,
einer Addiereinheit (73) zum Addieren eines Summanden und irgendeiner einer Ausgangsgröße des Pipelineregisters (71) oder eines Addenden, und um ein Additionsergebnis als Ausgangsgröße zu liefern,
dadurch gekennzeichnet, daß die Produktsummen-Operationseinheit ferner folgendes aufweist:
eine Zeitsteuersignal-Generatorschaltung (62) zum Erzeugen eines ersten Zeitsteuersignals (T1) synchronisiert mit einem ersten Takt (CK1) und eines zweiten Zeitsteuersignals (T2) mit der gleichen Frequenz wie, jedoch einer verschiedenen Phase von dem ersten Takt (CK1), wobei das zweite Zeitsteuersignal (T2) mit einem zweiten Takt (CK2) synchronisiert ist;
ein Befehlsregister (42), in welches ein Befehl in Synchronisation mit dem ersten Zeitsteuersignal (T1) geladen werden kann und welches betreibbar ist, um den Befehl auszugeben;
einen Befehlsdekodierer (82), der betreibbar ist, um den von dem Befehlsregister (42) ausgegebenen Befehl in ein Steuersignal zu dekodieren und um den dekodierten Befehl an die Multipliziereinheit (70) und das Pipelineregister (71) auszugeben, und
eine Steuersignal-Verriegelungseinrichtung (83), in die das von dem Befehlsdekodierer (82) ausgegebene Steuersignal in Synchronisation mit dem zweiten Zeitsteuersignal (T2) geladen werden kann und die betreibbar ist, um das geladene Steuersignal auszugeben; und
eine Steuersignalwählvorrichtung (63), in die das durch den Befehlsdekodierer (82) ausgegebene Steuersignal und das von der Steuersignal-Verriegelungseinrichtung (83) ausgegebene Steuersignal eingespeist werden und die im Ansprechen auf das erste Zeitsteuersignal (T1) betreibbar ist, um das von der Steuersignal-Verriegelungseinrichtung (83) ausgegebene Steuersignal auszuwählen und um im Ansprechen auf das zweite Zeitsteuersignal (T2) das von dem Befehlsdekodierer (82) ausgegebene Steuersignal auszuwählen und das ausgewählte Steuersignal an die Addiereinheit (73) auszugeben.

8. Produktsummen-Operationseinheit, mit:
einer Multipliziereinheit (70) zum Berechnen eines Produktes durch Multiplizieren eines Multiplikanden und eines Multiplikators,
einem Pipelineregister (71), in welches ein Multiplikationsergebnis, welches durch die Multipliziereinheit (70) berechnet wurde, geladen werden kann,
einer Addiereinheit (73) zum Addieren eines Summanden und irgendeiner einer Ausgangsgröße des Pipelineregisters (71) oder eines Addenden, und um ein Additionsergebnis als eine Ausgangsgröße zu liefern,
dadurch gekennzeichnet, daß die Produktsummem-Operationseinheit ferner folgendes aufweist:
einen Zustandszähler (102), der betreibbar ist, um ein erste Zustandssignal (SC1) durch Zählen eines ersten Taktes (CK1) auszugeben und um auch ein zweites Zustandssignal (SC2) durch Zählen eines zweiten Taktes (CK2) mit der gleichen Frequenz wie, jedoch einer unterschiedlichen Phase von dem ersten Takt (CK1) auszugeben,
einen ersten Befehlsdekodierer (101), der betreibbar ist, um einen in diesen eingespeisten Befehl in ein erstes Steuersignal zu dekodieren, um das erste Steuersignal an die Multipliziereinheit (70) und das Pipelineregister (71) auszugeben, und um ein zweites und drittes Steuersignal (SE1, SE2) auszugeben, wenn die Zahl der Zyklen, die für die Ausführung des Befehlskodes erforderlich sind, mit dem ersten bzw. zweiten Zustandssignal (SC1, SC2) übereinstimmt;
eine Logikschaltung (104, 105), die betreibbar ist, um ein erstes Zeitsteuersignal (T1) synchronisiert mit dem ersten Takt (CK1) und basierend auf dem zweiten und dem dritten Steuersignal (SE1, SE2) und dem ersten und dem zweiten Takt (CK1, CK2) zu erzeugen, und um ein zweites Zeitsteuersignal (T2) synchronisiert mit dem zweiten Takt (CK2) zu erzeugen;
ein erstes Befehlsregister (42), in welches ein Befehl in Synchronisation mit dem ersten Zeitsteuersignal (T1) geladen werden kann und welches betreibbar ist, um den eingeladenen Befehl an den ersten Befehlsdekodierer (101) auszugeben,
ein zweites Befehlsregister (43), in welches ein Befehl von dem ersten Befehlsregister (42) in Synchronisation mit dem zweiten Zeitsteuersignal (T2) geladen werden kann und welches betreibbar ist, um den eingeladenen Befehl auszugeben;
einen zweiten Befehlsdekodierer (103) zum Dekodieren des von dem zweiten Befehlsregister (43) ausgegebenen Befehl in ein Addiereinheits-Steuersignal und welcher betreibbar ist, um das Addiereinheits-Steuersignal auszugeben; und
eine Addiereinheits-Steuersignal-Ausgabeschaltung (120), in die das erste von dem ersten Befehlsdekodierer (101) ausgegebene Steuersignal eingespeist wird und auch das Addiereinheits-Steuersignal eingespeist wird, welches von dem zweiten Befehlsdekodierer (103) ausgegeben wird, und welche betreibbar ist, um das Addiereinheits-Steuersignal, welches von dem zweiten Befehlsdekodierer (103) ausgegeben wurde, basierend auf dem ersten Takt (CK1) auszuwählen und um das erste von dem ersten Befehlsdekodierer (101) ausgegebene Steuersignal basierend auf dem zweiten Takt (CK2) auszuwählen und um das ausgewählte Steuersignal an die Addiereinheit (73) auszugeben.

9. Produktsummen-Operationseinheit nach Anspruch 8, bei der die Logikschaltung (104, 105) aus einer ersten bzw. UND- oder NAND-Schaltung zusammengesetzt ist, um das erste Zeitsteuersignal (T1) synchronisiert mit dem ersten Takt (CK1) zu erzeugen, und zwar basierend auf irgendeinem des zweiten und dritten Steuersignals (SE1, SE2) und irgendeinem von dem ersten und zweiten Takt (CK1, CK2) und einer zweiten bzw. UND- oder NAND-Schaltung zusammengesetzt ist, um das zweite Zeitsteuersignal (T2) synchronisiert mit dem zweiten Takt (CK2) basierend auf dem anderen der zweiten und dritten Steuersignale (SE1, SE2) und dem anderen der ersten und zweiten Takte (CK1, CK2) zu erzeugen.

10. Produktsummen-Operationseinheit nach Anspruch 6, ferner mit:
einer Datenwählvorrichtung (72), in die die Ausgangsgröße des Pipelineregisters (71) und der Addend eingespeist werden und die betreibbar ist, um als Ausgangsgröße irgendeinen der Ausgänge des Pipelineregisters (71) oder den Addenden auszuwählen, wobei der zu der Addiereinheit (73) gesendete dekodierte Befehl auch zu der Datenwählvorrichtung (72) gesendet wird.

11. Produktsummen-Operationseinheit nach irgendeinem der Ansprüche 7 bis 9, ferner mit:
einer Datenwählvorrichtung (72), in die die Ausgangsgröße des Pipelineregisters (71) und der Addend eingespeist werden und die betreibbar ist, um als Ausgangsgröße irgendeinen der Ausgänge des Pipelineregisters (71) oder den Addenden auszuwählen, wobei das ausgewählte Steuersignal, welches an die Addiereinheit (73) ausgegeben wird, auch an die Datenwählvorrichtung (72) ausgegeben wird.

## Revendications

1. Unité d'opération de somme de produit comprenant :
une unité de multiplication (1) pour calculer un produit en multipliant un multiplicande et un multiplicateur ;
un registre à chevauchement (2) dans lequel un résultat de multiplication calculé par ladite unité de multiplication (1) peut être chargé,
une unité d'additionneur (3) pour additionner un opérande de somme et une quelconque d'une sortie dudit registre à chevauchement (2) ou d'un cumulateur, et pour fournir un résultat d'addition comme une sortie ;
caractérisé en ce que l'unité d'opération de somme de produit comprend en outre :
un moyen de génération de signal de temporisation (4) pour générer un premier signal de temporisation (T1) synchronisé avec une première horloge (CK1), et un second signal de temporisation (T2) ayant la même fréquence, mais de phase différente, de ladite première horloge (CK1), ledit second signal de temporisation (T2) étant synchronisé avec une seconde horloge (SK2) ;
un premier moyen de verrouillage d'instruction et de décodeur (5) dans lequel une instruction peut être chargée en synchronisation avec ledit premier signal de temporisation (T1), et utilisable pour décoder ladite instruction et fournir un premier signal de commande correspondant à ladite instruction ;
un second moyen de verrouillage d'instruction et décodeur (6) dans lequel ladite instruction peut être changée à partir dudit premier moyen de verrouillage d'instruction et de décodeur (5), en synchronisation avec ledit second signal de temporisation (T2), et utilisable pour décoder ladite instruction et fournir un second signal de commande correspondant à ladite instruction ;
un sélecteur de signal de commande (7) dans lequel les premier et second signaux de commande sont reçus, utilisable pour fournir ledit second signal de commande à l'unité d'additionneur (3) en réponse audit premier signal de temporisation (T1) et pour fournir ledit premier signal de commande à l'unité d'additionneur (3), en réponse audit second signal de temporisation (T2).

2. Unité d'opération de somme de produit selon la revendication 1, dans laquelle le moyen de génération de signal de temporisation (4) est utilisable pour générer un troisième signal de temporisation (T3) de façon synchrone avec ledit premier signal de temporisation (T1), et pour générer une quatrième signal de temporisation (T4) de façon synchrone avec ledit second signal de temporisation (T2), dans lequel ledit sélecteur de signal de commande (7) est commandé par lesdits troisième et quatrième signaux de temporisation (T3, T4).

3. Unité d'opération de somme de produit selon la revendication 2, dans laquelle ledit troisième signal de temporisation (T3) est fourni avec la même temporisation que ledit premier signal de temporisation (T1), et ledit quatrième signal de temporisation (T4) est fourni avec la même temporisation que ledit second signal de temporisation (T2).

4. Unité d'opération de somme de produit selon la revendication 2, dans laquelle lesdites première et seconde horloges (CK1, CK2) sont fournies pour commander l'opération de ladite unité d'opération de somme de produit, et dans laquelle ledit troisième signal de temporisation (T3) est fourni avec la même temporisation que ladite première horloge (CK1), et ledit quatrième signal de temporisation (T4) est fourni avec la même temporisation que ladite seconde horloge (CK2).

5. Unité d'opération de somme de produit selon la revendication 1, dans laquelle ladite unité d'additionneur (3) additionne l'opérande de somme et la sortie dudit registre à chevauchement (2), sur la base dudit second signal de commande, et additionne aussi l'opérande de somme et le cumulateur sur la base dudit premier signal de commande.

6. Unité d'opération de somme de produit, comprenant
une unité de multiplication (70) pour calculer un produit en multipliant un multiplicande et un multiplicateur,
un registre à chevauchement (71) dans lequel un résultat de multiplication calculé par ladite unité de multiplication (70) peut être chargé,
une unité d'additionneur (73) pour additionner un opérande de somme et une quelconque d'une sortie dudit registre à chevauchement (71) ou un cumulateur, et pour fournir un résultat d'addition comme une sortie,
caractérisé en ce que l'unité d'opération de somme de produit comprend en outre :
un circuit de génération de signal de temporisation (62) pour générer un premier signal de temporisation (T1) synchronisé avec une première horloge (CK1), et un second signal de temporisation (T2) ayant la même fréquence, mais une phase différente, ladite première horloge (CK1), ledit second signal de temporisation (T2) étant synchronisés avec une seconde horloge (CK2) ;
un premier registre d'instruction (42) dans lequel une instruction peut être chargée en synchronisation avec ledit premier signal de temporisation (T1) et utilisable pour fournir ladite instruction ;
un second registre d'instruction (43) dans lequel ladite instruction peut être chargée par ledit premier registre d'instruction (42), en synchronisation avec ledit second signal de temporisation (T2), et utilisable pour fournir ladite instruction ;
un sélecteur de signal de commande (63) dans lequel sont appliqués ladite instruction telle que fournie par ledit premier registre d'instruction (42) et ladite instruction telle que fournie par le second registre d'instruction (43), et utilisable, en réponse au premier signal de temporisation (T1), pour fournir ladite instruction telle que fournie par le second registre d'instruction (43) et, en réponse audit second signal de temporisation (T2), pour fournir ladite instruction telle que fournie par ledit premier registre d'instruction (42),
un premier décodeur d'instruction (60) utilisable pour décoder ladite instruction fournie par le premier registre d'instruction (42) en un signal de commande d'unité de multiplication et pour fournir l'instruction décodée à ladite unité de multiplication (70) et audit registre à chevauchement (71), et
un second décodeur d'instruction (61) utilisable pour décoder l'instruction fournie par ledit sélecteur de signal de commande (63) et pour fournir ladite instruction décodée à ladite unité d'additionneur (73).

7. Unité d'opération de somme de produit, comprenant
une unité de multiplication (70) pour calculer un produit en multipliant un multiplicande et un multiplicateur,
un registre à chevauchement (71) dans lequel un résultat de multiplication calculé par ladite unité de multiplication (70) peut être chargé,
une unité d'additionneur (73) pour additionner un opérande de somme et une sortie quelconque d'une sortie dudit registre à chevauchement (71) ou un cumulateur, et pour fournir un résultat d'addition comme une sortie,
caractérisé en ce que l'unité d'opération de somme de produit comprend en outre :
un circuit de génération de signal de temporisation (62) pour générer un premier signal de temporisation (T1) synchronisé avec les premières horloges (CK1), et un second signal de temporisation (T2) ayant la même fréquence, mais une phase différente, ladite première horloge (CK1), ledit second signal de temporisation (T2) étant synchronisés avec une seconde horloge (CK2) ;
un registre d'instruction (42) dans lequel une instruction peut être chargée en synchronisation avec ledit premier signal de temporisation (T1) et utilisable pour fournir ladite instruction ;
un décodeur d'instruction (82) utilisable pour décoder ladite instruction fournie par le registre d'instruction (42) en un signal de commande et pour fournir l'instruction décodée à ladite unité de multiplication (70) et audit registre à chevauchement (71) ; et
un circuit de verrouillage de signal de commande (83) dans lequel le signal de commande fourni par ledit décodeur d'instruction (82) peut être chargé en synchronisation avec ledit signal de temporisation (T2), et utilisable pour fournir le signal de commande chargé ; et
un sélecteur de signal de commande (63) dans lequel sont appliqués le signal de commande fourni par le décodeur d'instruction (82) et le signal de commande fourni par le circuit de verrouillage de signal de commande (83), et utilisable, en réponse audit premier signal de temporisation (T1), pour sélectionner le signal de commande fourni par le circuit de verrouillage de signal de commande (83) et, en réponse audit second signal de temporisation (T2), pour sélectionner ledit signal de commande fourni par le décodeur d'instruction (82), et pour fournir le signal de commande sélectionné à l'unité d'additionneur (73).

8. Unité d'opération de somme de produit comprenant :
une unité de multiplication (70) pour calculer un produit en multipliant un multiplicande et un multiplicateur,
un registre à chevauchement (71) dans lequel un résultat de multiplication calculé par ladite unité de multiplication (70) peut être chargé,
une unité d'additionneur (73) pour additionner un opérande de somme et une sortie quelconque d'une sortie dudit registre à chevauchement (71) ou un cumulateur, et pour fournir un résultat d'addition comme une sortie,
caractérisé en ce que l'unité d'opération de somme de produit comprend en outre :
un compteur d'état (102) utilisable pour fournir un premier signal d'état (SC1) en comptant une première horloge (CK1), et pour fournir aussi un second signal d'état (SC2) en comptant une seconde horloge (CK2) ayant la même fréquence, et une phase différente, que ladite première horloge (CK1),
un premier décodeur d'instruction (101) utilisable pour décoder une entrée d'instruction de celui-ci en un premier signal de commande, pour fournir le premier signal de commande à ladite unité de multiplication (70) et un registre à chevauchement (71), et pour fournir les second et troisième signaux de commande (SE1, SE2) lorsque le nombre de cycles requis pour l'exécution de code d'instruction correspond au premier et second signaux d'état respectivement (SC1, SC2) ;
un circuit logique (104, 105), utilisable pour générer un premier signal de temporisation (T1) synchronisé avec ladite première horloge (CK1) et sur la base desdits second et troisième signaux de commande (SE1, SE2) et desdites première et seconde horloges (CK1, CK2), et pour générer un second signal de temporisation (T2) synchronisé avec ladite seconde horloge (CK2) ;
un premier registre d'instruction (42) dans lequel une instruction peut être chargée en synchronisation avec ledit premier signal de temporisation (T1), et utilisable pour fournir l'instruction chargée audit premier décodeur d'instruction (101),
un second registre d'instruction (43) dans lequel une instruction du premier registre d'instruction (42) peut être chargée en synchronisation avec ledit second signal de temporisation (102), et utilisable pour fournir l'instruction chargée ;
un second décodeur d'instruction (103) pour décoder l'instruction fournie par ledit second registre d'instruction (43) en un signal de commande d'unité d'additionneur, et utilisable pour fournir le signal de commande d'unité d'additionneur ; et
un circuit de sortie de signal de commande d'unité d'additionneur (120) dans lequel sont appliqués le premier signal de commande fourni par ledit premier décodeur d'instruction (101) et le signal de commande d'unité d'additionneur fourni par le second décodeur d'instruction (103), utilisable pour sélectionner ladite sortie de signal de commande d'unité d'additionneur fournie par ledit second décodeur d'instruction (103) sur la base de ladite première horloge (CK1), et pour sélectionner ladite première sortie de signal de commande fournie par le premier décodeur d'instruction (101) sur la base de ladite seconde horloge (CK2), et pour fournir le signal de commande sélectionné à l'unité d'additionneur (73).

9. Unité de somme de produit selon la revendication 8, dans laquelle ledit circuit logique (104, 105) est composé d'un premier circuit ET ou NON ET respectivement pour générer ledit premier signal de temporisation (T1), synchronisé avec ladite première horloge (CK1), sur la base d'un quelconque desdits second et troisième signaux de commande (SE1, SE2), et une quelconque desdites première et seconde horloges (CK1, CK2), et un second circuit ET ou NON ET respectivement pour générer ledit second signal de temporisation (T2), synchronisé avec ledit second signal d'horloge (CK2), sur la base de l'autre desdits second et troisième signaux de commande (SE1, SE2) et l'autre desdites première et seconde horloges (CK1, CK2).

10. Unité d'opération de somme de produit selon la revendication 6, comprenant en outre :
un sélecteur de données (72) dans lequel la sortie dudit registre à chevauchement (71) et ledit cumulateur sont reçus, utilisable pour sélectionner comme sortie une quelconque de ladite sortie dudit registre à chevauchement (71) ou dudit cumulateur, dans lequel l'instruction décodée envoyée à ladite unité d'additionneur (73) est aussi envoyée au sélecteur de données (72).

11. Unité d'opération de somme de produit selon l'une quelconque des revendications 7 à 9 comprenant en outre :
un sélecteur de données (72) dans lequel la sortie dudit registre à chevauchement (71) et ledit cumulateur sont appliqués, utilisable pour sélectionner comme sortie une quelconque de ladite sortie dudit registre à chevauchement (71) ou dudit cumulateur, dans lequel la sortie du signal de commande sélectionnée à l'unité d'additionneur (73) est aussi fournie au sélecteur de données (72).
